# EUROPÄISCHE PATENTSCHRIFT

(11) **EP 3 368 797 B1**
(45) Veröffentlichungstag und Bekanntmachung des Hinweises auf die Patenterteilung: **12.08.2020**
(21) Anmeldenummer: 16788104.4
(22) Anmeldetag: 28.10.2016
(51) Int. Cl.: F16H 57/04

(54) **STIRNRADGETRIEBE**
SPUR GEAR TRANSMISSION
ENGRENAGE CYLINDRIQUE

(30) Priorität: 30.10.2015 DE 102015221234
(43) Veröffentlichungstag der Anmeldung: 05.09.2018
(73) Patentinhaber: Voith Patent GmbH, 89522 Heidenheim (DE)
(72) Erfinder: KÄMMERER, Steffen, 87509 Immenstadt (DE); ZEMELLA, Philipp, 38678 Clausthal-Zellerfeld (DE); RAUCH, Matthias, 87437 Kempten (DE); SCHNEIDER, Marco, 87534 Oberstaufen (DE)
(74) Vertreter: Voith Patent GmbH - Patentabteilung
(86) Internationale Anmeldenummer: PCT/EP2016/076006
(87) Internationale Veröffentlichungsnummer: WO 2017/072268

(56) Entgegenhaltungen:
- WO-A1-2015/177332
- DE-B- 1 147 812
- US-A- 2 214 485

## Beschreibung

Die vorliegende Erfindung betrifft ein Stirnradgetriebe mit wenigstens zwei verzahnten Stirnrädern, im Einzelnen gemäß dem Oberbergriff von Anspruch 1.

Stirnradgetriebe der gattungsgemäßen Art sind beispielsweise aus der WO 2012/028231 A1 bekannt. Solche Stirnradgetriebe sind beispielsweise als hochtourige Getriebe, wie Turbogetriebe, ausgeführt.

Besonders bei solchen hochtourigen Getrieben wie Turbogetrieben entstehen aufgrund der Verwirbelung des Luft-Öl-Gemischs im Innenraum des Getriebegehäuses Verluste, die unerwünscht sind. Zur Verlustreduzierung sind verschiedene Maßnahmen bekannt. Eine Maßnahme sieht vor, den Innenraum des Getriebegehäuses mittels einer Vakuumpumpe zu besaugen, sodass der Druck im Innenraum niedriger als jener der Umgebung außerhalb des Getriebegehäuses ist.

Eine andere Maßnahme, die eine solche Besaugung des Getriebegehäuses vermeiden soll, ist in der eingangs genannten WO 2012/028231 A1 dargestellt, nämlich das Vorsehen einer eng anliegenden Hüllwand um die Stirnräder, welche die Stirnräder in Umfangsrichtung bis auf einen Einlassspalt und gegebenenfalls Auslassspalt, der außerhalb des äußeren Umfangs der Stirnräder positioniert ist, umschließt. Auch diese Kapselung der Stirnräder mit der Hüllwand wurde vorgesehen, um einen Unterdruck im Bereich des äußeren Durchmessers der Stirnräder beziehungsweise im Bereich von deren Verzahnungen zu erzeugen, der die Verluste reduziert.

Beide bekannten Maßnahmen basieren somit auf der Annahme, dass ein möglichst geringer Druck, das heißt ein möglichst starkes Vakuum im Bereich der umlaufenden Verzahnungen der Stirnräder erzeugt werden muss, um die Verlustleistungen zu reduzieren. Daher wurden entsprechend aufwändige Maßnahmen zur weitgehenden Abdichtung beziehungsweise vergleichsweise leistungsstarke und damit teure und energieintensive Vakuumpumpen vorgesehen, um das Vakuum möglichst zu optimieren. Diese Maßnahmen sind mit unerwünschten Kosten verbunden.

DE 198 60 353 C1 offenbart ein Stirnradgetriebe, bei welchem die Stirnräder von einem zusätzlichen Innengehäuse, das innerhalb eines Hauptgehäuses befestigt ist, umschlossen werden. Im Innenraum des Innengehäuses wird mittels einer Pumpe ein Teilvakuum erzeugt. Der Raum zwischen dem Innengehäuse und dem Hauptgehäuse steht unter Atmosphärendruck. Die Stirnräder ragen nicht nach außen aus dem Innengehäuse heraus, sondern werden mit Abstand von diesem umschlossen, sodass sich auch keine ineinander übergehende Ringspalte ergeben.

DE 10 2006 022 964 A1 beschreibt einen Fluidausgleichsbehälter und ein damit ausgestattetes Getriebe. Der Fluidausgleichsbehälter umschließt die Stirnräder seitlich über einen Teil ihres Umfangs.

DE 10 2007 041 318 A1 beschreibt ein Schaltgetriebe mit einer Zahnradpumpe, wobei die Zahnradpumpe eine Außenzahnradpumpe ist und zwei miteinander kämmende Zahnräder aufweist, von denen eines einem der Radsätze im Getriebe angehört. Zur Ausbildung eines Pumpspalts ist unterhalb der Zahnräder ein zusätzliches Gehäuse vorgesehen, das sich teilweise über den Umfang der Zahnräder erstreckt.

GB 292 540 A beschreibt mit hoher Drehzahl umlaufende Zahnräder in einem Gehäuse, denen eine besondere Führung zugeordnet ist, um die Schmierung der Zahnräder zu verbessern. Die Führung umschließt die Zahnräder teilweise und ist auf der Unterseite zumindest derart geschlossen, dass die Zahnräder nicht aus der Führung herausragen.

GB 1 426 352 A beschreibt eine Schmiereinrichtung für Zahnräder, bei welchem ebenfalls ein teilweise geöffnetes Innengehäuse vorgesehen ist, das die Zahnräder auf deren Unterseite und auf einer seitlichen Seite eng umschließt.

GB 458 379 A offenbart eine Luftpumpe, die in ein Getriebe integriert ist. Die Luftpumpe weist Führungsbögen auf, die die Zahnräder auf deren Stirnseiten einschließen.

US 2014/0054114 A1 offenbart eine Schmierölversorgung für ein Getriebe, bei welcher eine Abdeckung das Ritzel zweier Stirnräder vollständig umschließt und das andere Zahnrad der beiden Stirnräder über dem halben Umfang umschließt.

US 5 950 501 A zeigt ein Stirnradgetriebe, dessen Innengehäuse die Stirnräder mit einem gewissen Abstand umschließt und mittels einer Pumpe evakuiert oder mit einem Gas befüllt wird. Es sind keine ineinander übergehende Ringspalte vorgesehen und die Stirnräder ragen nicht aus dem Innengehäuse heraus.

US 2 645 305 A beschreibt eine Schmiereinrichtung für Stirnräder eines Getriebes mit einer seitlichen Abschirmung der Stirnräder, die nur über einen kleinen Teil des äußeren Umfangs der Stirnräder ragt.

EP 2 535 618 A1 offenbart von Gehäusen umschlossene Stirnräder, die jedoch nicht aus den Gehäusen herausragen.

WO 2012/028231 A1 offenbart ein Zahnradgetriebe mit einer Hüllwand, die wenigstens eines von zwei miteinander zusammenarbeitenden Zahnrädern umschließt und den umschlossenen Innenraum partiell oder vollkommen gegen die Umgebung absperrt. Die Zahnräder ragen nicht aus der Hüllwand heraus.

JP 2011-163365 A offenbart ein Zahnradgetriebe mit einem Ölkanal, der sich teilweise der Form der Zahnräder anschmiegt.

DE 33 31 131 A1 offenbart ein doppelwandiges Gehäuse eines Achsgetriebes, sodass das Gehäuse an einen Kühlmittelkreislauf angeschlossen werden kann und ein Kühlmantel im Gehäuse erreicht werden kann.

Für ein Hybridgetriebe ist es aus DE 10 2006 044 498 A1 vorbekannt, Rohre über den äußeren Umfang eines Stators zu führen und den Stator durch Berieselung aus diesen zu kühlen.

Bei einer Ausführung aus US 2,214,485 wird in einem Getriebegehäuse ein Öl-Luft-Gemisch erzeugt, welches zur Schmierung verwendet wird.

Bei allen bekannten Stirnradgetrieben der gattungsgemäßen Art wird die im Betrieb in der Verzahnung auftretende Verlustwärme ganz überwiegend durch ein Schmiermittel abgeführt, das zugleich der Schmierung des Zahneingriffsbereiches der miteinander kämmenden Verzahnungen dient, um dadurch einen Verschleiß der Verzahnungen zu minimieren. Wenn die Umgebung des Stirnradgetriebes eine entsprechend geringere Temperatur als der Bereich um die Stirnräder herum aufweist, wird sich naturgemäß zudem eine gewisse Wärmeabfuhr durch freie Konvektion einstellen. Diese Wärmeabfuhr ist jedoch im Verhältnis zu der mit dem Schmiermittel abgeführten Wärme zu vernachlässigen.

Grundsätzlich kann mit dem Schmiermittel umso mehr Wärme aus dem Bereich der Verzahnungen abgeführt werden, je mehr Schmiermittel in die Verzahnungen beziehungsweise in den kämmenden Eingriff der Verzahnungen eingebracht wird. Insbesondere bei hochtourigen Getrieben wie Turbogetrieben, wie sie die vorliegende Erfindung gemäß einer Ausführungsform betrifft, wird jedoch auch mit zunehmendem Schmiermittelvolumen, das in die Verzahnung eingebracht wird, die Verlustleistung deutlich erhöht. Somit bedeutet eine Reduzierung der Temperaturbeanspruchung der Bauteile durch Einbringen eines größeren Schmiermittelstromes zugleich eine Erhöhung der Verlustleistung.

Der vorliegenden Erfindung liegt daher die Aufgabe zugrunde, ein Stirnradgetriebe der eingangs genannten Art derart weiterzuentwickeln, dass sowohl ein hoher Wirkungsgrad als auch eine geringe Temperaturbelastung der Bauteile erreicht wird.

Die erfindungsgemäße Aufgabe wird durch ein Stirnradgetriebe, das auch als Drehmoment-/Drehzahlwandlungseinrichtung, insbesondere Drehzahl-/Drehzahlwandlungseinrichtung zwischen zumindest einer An- und einer Abtriebswelle bezeichnet werden kann, mit den Merkmalen des Anspruchs 1 gelöst. In den abhängigen Ansprüchen sind vorteilhafte und besonders zweckmäßige Ausgestaltungen der Erfindung angegeben.

Ein erfindungsgemäßes Stirnradgetriebe weist wenigstens zwei verzahnte Stirnräder auf, deren Verzahnungen in einem kämmenden Eingriff miteinander stehen, wobei die Stirnräder, insbesondere die beiden Stirnräder jeweils über einer Drehachse drehbar sind. Das Stirnradgetriebe weist eine Hüllwand auf, welche die Stirnräder, insbesondere die wenigstens zwei miteinander in Eingriff stehenden Stirnräder zumindest teilweise in Umfangsrichtung und in Richtung der Drehachsen umschließt, wobei die Hüllwand eine Innenkontur aufweist, welche den Außendurchmessern der Stirnräder derart angepasst ist, dass sich zwischen der Hüllwand und den Stirnrädern, insbesondere der Hüllwand und den zwei miteinander kämmenden Stirnrädern zwei ineinander übergehende Ringspalte ergeben, wobei je ein Ringspalt zumindest im Wesentlichen konzentrisch zu je einer Drehachse angeordnet ist.

Erfindungsgemäß ist das Stirnradgetriebe sowohl mit einer Schmiereinrichtung versehen, die eingerichtet ist, einen Schmiermittelstrom in die Verzahnungen der Stirnräder zu leiten, als auch zusätzlich mit einer Kühleinrichtung versehen, die eingerichtet ist, einen Kühlmittelstrom durch einen oder mehrere innerhalb der Hüllwand verlaufende Kühlkanäle und/oder außen entlang der Hüllwand zu leiten. Somit ist es erfindungsgemäß nicht mehr notwendig, einen großen Wärmestrom mit dem Schmiermittel aus der Hüllwand abzuführen, sondern ein in der Regel wenigstens gleich großer Wärmestrom oder vorteilhaft ein größerer, insbesondere deutlich größerer Wärmestrom kann mittels der Kühleinrichtung, das heißt durch den Kühlmittelstrom aus der Hüllwand abgeleitet werden. Dies ermöglicht wiederum, den Schmiermittelstrom vergleichsweise klein auszuführen, sodass die Verlustleistung reduziert wird. Insbesondere ist somit der Schmiermittelstrom kleiner als der Kühlmittelstrom, insbesondere beträgt der Kühlmittelstrom ein Vielfaches des Schmiermittelstromes, beispielsweise wenigstens das Doppelte, Fünffache oder Zehnfache.

Gemäß einer nicht beanspruchten vorteilhaften Ausgestaltung der Erfindung umfasst die Kühleinrichtung eine Berieselungseinrichtung, mittels welcher der Kühlmittelstrom von außen auf die Hüllwand rieselbar oder sprühbar ist.

Besonders vorteilhaft ist, wenn die Hüllwand auf ihrer Außenseite Stege aufweist, die einen Strömungsweg des Kühlmittelstromes seitlich begrenzen, und zwar seitlich bezogen auf die Strömungsrichtung des Kühlmittelstromes über die Außenseite der Hüllwand. Diese Stege können gemäß einer ersten Ausführungsform integral an der Hüllwand ausgebildet sein oder aber gemäß einer zweiten Ausführungsform von separaten Bauteilen gebildet werden, welche mit der Hüllwand verbunden sind. Die Verbindung kann durch Kraftschluss, Formschluss oder Stoffschluss erfolgen und lösbar oder unlösbar ausgeführt sein. Beispielsweise weist die Kühleinrichtung wenigstens ein, vorteilhaft zwei entlang der Außenseite der Hüllwand verlaufendes/verlaufende kühlmittelführendes/kühlmittelführende Rohr(e) auf, das beziehungsweise die (jeweils) eine Vielzahl von mit Abstand zueinander positionierte Auslassöffnungen aufweisen, um den Kühlmittelstrom verteilt außen auf der Hüllwand aufzubringen. Um die Schmierung und die Kühlung des Stirnradgetriebes gleichermaßen zu optimieren, sind ein Massen- und/oder Volumenstrom des Kühlmittelstromes der Kühleinrichtung und des Schmiermittelstromes der Schmiereinrichtung vorteilhaft getrennt voneinander und insbesondere unabhängig voneinander einstellbar, sodass jeder der beiden Ströme mit einem anderen konstanten oder regelbaren, das heißt insbesondere im Betrieb veränderbaren Wert einstellbar ist.

In einer Weiterbildung der Erfindung kann vorgesehen sein, als Kühlmittel ein anderes Medium als das Schmiermittel zu verwenden, beispielsweise als Kühlmittel Wasser oder ein Wassergemisch und als Schmiermittel Öl.

Gemäß einer anderen Ausführungsform der Erfindung umfasst der Kühlmittelstrom einen ersten Ölvolumenstrom und der Schmiermittelstrom umfasst einen zweiten Ölvolumenstrom, die aus einem gemeinsamen Ölvorrat, insbesondere Ölsumpf im Stirnradgetriebe, oder aus voneinander getrennten Ölvorräten gefördert werden.

Gemäß einer vorteilhaften Ausführungsform der Erfindung umfasst die Hüllwand wenigstens einen Kühlkanal, der wenigstens teilweise in Richtung der Drehachsen und/oder winklig, insbesondere senkrecht hierzu, innerhalb der Hüllwand verläuft und in seinem Verlauf wenigstens abschnittsweise der Innenkontur der Hüllwand folgt.

Gemäß der Erfindung weist die Hüllwand einen die Innenkontur ausbildenden wärmeleitenden, insbesondere massiv ausgeführten Teil und einen außen daran angeschlossenen oder sich integral daran anschließenden Wärmetauscher auf, in dem der wenigstens eine Kühlkanal ausgebildet ist.

Der Wärmetauscher kann beispielsweise als Plattenwärmetauscher ausgeführt sein. Andere Wärmetauscherkonstruktionen sind möglich, beispielsweise auch ein Rohrbündelwärmetauscher.

Um eine Strömungsgeschwindigkeit des Kühlmittelstromes auf der Außenseite der Hüllwand, das heißt auf einer äußeren vom Kühlmittelstrom überströmten Oberfläche zu reduzieren, ist die Hüllwand vorteilhaft auf ihrer Außenseite in einen vom Kühlmittelstrom überströmten Bereich mit einer profilierten Oberfläche versehen. Die Oberflächenprofilierung kann beispielsweise durch Treppen beziehungsweise Stufen und/oder Vertiefungen gebildet werden. Bei einer treppenförmigen Gestaltung strömt der Kühlmittelstrom stufenweise entlang der Treppe auf der Außenseite der Hüllwand von oben nach unten. Stufen wirken nach Art einer Staumauer, die bei Erreichen ihres Scheitelpunktes überströmt wird.

Besonders günstig ist es, wenn der Kühlmittelstrom frei in einen unterhalb der Hüllwand positionierten Ölsumpf abläuft, besonders bei Ausgestaltungen, in welchen der Kühlmittelstrom zumindest auch auf die Außenseite der Hüllwand aufgebracht wird. Prinzipiell ist es jedoch auch möglich, dass Kühlmittel aus dem wenigstens einen Kühlkanal in der Hüllwand frei in den Ölsumpf abströmt.

Die auf der Hüllwand vorteilhaft vorgesehenen Stege können beispielsweise derart in Radialrichtung der Drehachsen gegenüber einer vom Kühlmittelstrom überströmten Außenfläche der Hüllwand erhaben sein, dass sie eine Überströmung von in Richtung der Drehachsen gewandten Stirnseiten der Hüllwand mit Kühlmittel vermeiden. Dies hat den Vorteil, dass das Kühlmittel nicht in rotierende Bereiche des Stirnradgetriebes gelangen kann, was eine entsprechende Verlustleistung zur Folge hätte.

Gemäß einer nicht beanspruchten Ausgestaltung der Erfindung ist in einem vom Kühlmittelstrom überströmten Bereich einer Außenfläche der Hüllwand eine Wartungsöffnung vorgesehen, die derart von der Außenfläche hervorstehenden schachtartigen Seitenwänden umschlossen wird, dass ein Eindringen des Kühlmittelstromes in die Wartungsöffnung durch die Seitenwände verhindert wird. Bei Vorsehen wenigstens eines auf der Außenseite der Hüllwand verlaufenden kühlmittelführenden Rohres mit Auslassöffnungen ragen die Seitenwände vorteilhaft mindestens bis zur Oberseite, das heißt dem oberen äußeren Durchmesser des Rohres. Bei Vorsehen von Stegen auf der Hüllwand ragen die schachtartigen Seitenwände vorteilhaft wenigstens bis zum oberen Ende der Stege.

Gemäß einer Ausführungsform ist die Wartungsöffnung verschließbar, insbesondere mittels eines abnehmbaren oder abklappbaren Deckels. Dies ist jedoch nicht zwingend.

Die Kühleinrichtung sichert vorteilhaft eine gleichmäßige Benetzung der Hüllwand oder zumindest eines Teils der Außenfläche der Hüllwand mit Kühlmittel. Bei Vorsehen wenigstens eines Rohres mit Auslassöffnungen weisen diese gemäß einer Ausführungsform einen konstanten Abstand zueinander auf, beispielsweise zwischen 10 und 40 mm, insbesondere von 15 bis 25 oder 20 mm. Als Durchmesser der Öffnungen kommen beispielsweise 3 mm in Betracht. Gemäß einer alternativen Ausführungsform variieren der Abstand der Auslassöffnungen und/oder der Querschnitt der Auslassöffnungen, in Abhängigkeit des jeweiligen lokalen Wärmeanfalls an der entsprechenden Position der Außenseite der Hüllwand.

Um die Hüllwand mit wenigstens einem oder vorteilhaft einer Vielzahl von Kühlkanälen zu versehen, ist die Hüllwand gemäß einer vorteilhaften Ausführungsform aus Hohlprofilen hergestellt. Bei solchen Hohlprofilen ist die Querschnittsfläche des wenigstens einen Kühlkanals vorteilhaft größer als die Querschnittsfläche der den wenigstens einen Kühlkanal umgebenden Wände der Hüllwand, das heißt größer als die Querschnittfläche des "massiven" Materials der Hüllwand. Dies ist jedoch nicht zwingend. Beispielsweise kann der wenigstens eine Kühlkanal auch in einem sich an einen vergleichsweise gut wärmeleitenden massiven Bereich der Hüllwand anschließen.

Gemäß einer besonders vorteilhaften Ausführungsform umschließt die Hüllwand die beiden Stirnräder in Umfangsrichtung nur über einen Teil von deren Umfang, sodass ein Teil des äußeren Umfangs der beiden Stirnräder oder zumindest eines der beiden Stirnräder nach außen aus der Hüllwand herausragt. Dieser nach außen aus der Hüllwand herausragende Teil des Umfangs liegt somit frei gegenüber der Umgebung der Hüllwand, beispielsweise gegenüber einem Innenraum eines Getriebegehäuses des Stirnradgetriebes. Demnach ist keine vollständige Kapselung der Stirnräder wie beim genannten Stand der Technik vorgesehen. Der nach außen aus der Hüllwand herausragende Teil des Umfangs liegt, wenn die beiden Stirnräder nebeneinander positioniert sind, außerhalb einer Projektionsfläche, die durch einen Querschnitt senkrecht zur Drehachse der Stirnräder durch die entlang des äußeren Umfangs der Stirnräder positionierten Teile der Hüllwand gebildet wird. Mit anderen Worten weist die Hüllwand nicht nur eine Öffnung über dem Umfang der Stirnräder auf, durch welche die Stirnräder sozusagen in Sichtverbindung mit der Umgebung der Hüllwand stehen, sondern die Stirnräder ragen tatsächlich aus einer entsprechenden Öffnung der Hüllwand heraus und stehen über diese Öffnung über. Wenn die beiden Stirnräder übereinander positioniert sind, ragt entsprechend das untere Stirnrad nach unten über eine horizontale Ebene hinaus, in welcher die sich nach unten vom oberen zum unteren Stirnrad erstreckende Hüllwand endet.

Der aus der Hüllwand herausragende Teil der beiden Stirnräder oder des einen Stirnrads ist vorteilhaft auf der Unterseite der Stirnräder positioniert, das heißt im Betrieb des Stirnradgetriebes in Richtung eines Ölsumpfes, der sich durch die Schwerkraft unten im Stirnradgetriebe ansammelt. Auf ihrer entgegengesetzten oberen Seite werden die Stirnräder hingegen vorteilhaft vollständig von der Hüllwand umschlossen, insbesondere über wenigstens der oberen Hälfte des Umfangs des jeweiligen Stirnrads, wobei die obere Hälfte unten insbesondere durch eine Horizontale abgeschlossen wird, das heißt die Hüllwand endet auf ihrer Unterseite in einer horizontalen Ebene. Wenn die Stirnräder übereinander positioniert sind, wobei insbesondere genau zwei Stirnräder vorgesehen sind, von denen das eine über dem anderen positioniert ist, kann beispielsweise das untere Stirnrad beginnend zumindest im Wesentlichen in Höhe seiner Drehachse oder auch darunter über einen Bogen von wenigstens annähernd wenigstens 90° umschlossen sein und das obere Stirnrad ist dann vorteilhaft durch die Hüllwand um mehr als 180°, insbesondere um im Wesentlichen 270° umschlossen, beginnend neben dem Eingriffsbereich der beiden Verzahnungen und im weiteren Verlauf nach oben über den Scheitel des oberen Stirnrades hinweg auf die gegenüberliegende Seite bis wieder hinunter zumindest im Wesentlichen in Höhe der Drehachse des oberen Stirnrades.

Der nach unten aus der Hüllwand herausragende Teil der Stirnräder, bei Übereinanderpositionierung der Stirnräder der nach unten herausragende Teil des unteren Stirnrades ist vorteilhaft frei oberhalb eines Ölsumpfes im Getriebe positioniert, insbesondere mit Abstand zu dem Ölsumpf beziehungsweise einer unteren Wand des Getriebegehäuses, wobei der Abstand vorteilhaft ein Vielfaches des Abstandes zwischen der Hüllwand und dem umschlossenen Bereich des oder der Stirnräder beträgt.

Die Erfindung ist jedoch auch mit der entsprechenden Maßnahme bei einem Getriebe anwendbar, in dem ein Ölsumpf außerhalb des Getriebegehäuses vorgesehen ist oder auf einen entsprechenden Ölsumpf durch eine andere geeignete Schmierung verzichtet werden kann.

Im Unterschied zu beispielsweise der Gestaltung von Zahnradpumpen, die häufig auch zwei eng umschlossene, miteinander kämmende Zahnräder aufweisen, sind bei der vorliegenden Erfindung die miteinander kämmenden Zahnräder vorteilhaft frei von einem Eintauchen in ein Flüssigkeitsspiegel, insbesondere Ölspiegel beziehungsweise einen entsprechenden Flüssigkeits- oder Ölvorrat angeordnet.

Die beiden Stirnräder sind vorteilhaft in Horizontalrichtung des Stirnradgetriebes mit ihren Drehachsen nebeneinander positioniert, wobei die Drehachsen insbesondere innerhalb einer gemeinsamen horizontalen Ebene verlaufen. Die Ebene ist insbesondere parallel zur Oberfläche eines Ölsumpfes unten im Stirnradgetriebe. Denkbar ist jedoch auch eine Anordnung der Drehachsen in einer Ebene mit Neigung gegenüber einer Horizontalebene.

Vorteilhaft umschließt die Hüllwand die beiden Stirnräder vollständig über deren oberen Hälfte und einen Teil der unteren Hälfte darüber hinaus, betrachtet in einem Querschnitt durch eine vertikale Ebene senkrecht zu den Drehachsen der Stirnräder. Die beiden über die obere Hälfte hinausgehenden Teile der Umhüllung können insbesondere an ihrem freien Ende in ihrem Querschnitt verjüngt ausgeführt sein.

Gemäß einer vorteilhaften Ausbildung der vorteilhaften Ausführungsform der Hüllwand mit nur teilweiser Umschließung der Stirnräder in Umfangsrichtung ist der Spalt beziehungsweise Ringspalt zwischen der Umhüllung und dem Außendurchmesser der Stirnräder an zumindest einem freien Ende der Umhüllung verjüngt, insbesondere keilförmig verjüngt ausgeführt. Dies kann an einem freien Ende oder beiden freien Enden der Umhüllung vorgesehen sein. Eine solche Reduzierung des Ringspaltes gegenüber dem verbleibenden Bereich des Ringspaltes bewirkt eine Abdichtung, die einen unerwünschten Austritt und/oder Eintritt von Öl in den Ringspalt verhindert oder reduziert.

Gemäß einer Ausbildung ist der Bereich des Zahneingriffs der Stirnräder, insbesondere auf der Oberseite der beiden Stirnräder, frei von einer Umhüllung oder es ist ein entsprechendes Fenster in der Umhüllung zu Kontrollzwecken vorgesehen.

Der dargestellten Ausführungsform liegt die Erkenntnis zugrunde, dass nicht nur durch Erzeugen eines Unterdrucks beziehungsweise Vakuums im Bereich der Verzahnungen der umlaufenden Stirnräder eine Verlustleistungsreduzierung bewirkt werden kann, sondern dass sich um die Stirnräder in der Praxis eine dünne Schicht aus schmierstoffarmen, insbesondere schmierölarmen Medium ausbildet, da das Schmiermittel, insbesondere das Öl, durch die Zentrifugalkraft nach außen geschleudert wird. Eine solche Schicht oder Schichtung wird durch die Hüllwand stabilisiert, wobei durch gezieltes Auswählen der Dicke der Ringspalte festgesetzt werden kann, dass außerhalb der Hüllwand ein vergleichsweise ölreicheres Medium vorhanden sein kann, wohingegen innerhalb der Hüllwand, das heißt in den Ringspalten zwischen den Stirnrädern und der Hüllwand, ein ölarmes Medium vorhanden ist. Somit wird, auch ohne vollständige Kapselung beziehungsweise ohne angelegtes Vakuum verhindert, dass schmierstoffreiches Medium an die Stirnräder gelangt, welches beschleunigt werden muss und somit die Leistungsaufnahme der Stirnräder erhöht.

Es ist nicht ausgeschlossen, dass zusätzlich ein Unterdruck im Innenraum des Getriebegehäuses, welches die Hüllwand umschließt, angelegt wird, das heißt, dass im Innenraum ein niedrigerer Druck als in der Umgebung des Getriebegehäuses herrscht. Ein solcher Unterdruck kann beispielsweise mittels einer externen oder integrierten Vakuumpumpe erzeugt werden, deren Saugseite am Innenraum angeschlossen ist. Bei einem solchen reduzierten Umgebungsdruck der Hüllwand kann die Leistungsaufnahme durch das teilgekapselte Innengehäuse, das heißt mit der erfindungsgemäßen Hüllwand, noch weiter reduziert werden. Auch gegenüber einer Ausführungsform mit besaugtem Innenraum des Getriebegehäuses ohne Kapselung der Stirnräder, das heißt ohne Vorsehen einer Hüllwand, ist die Verlustleistung der erfindungsgemäßen Ausführungsform mit einer teilweisen oder vollständigen Kapselung der Stirnräder, wobei auf letztere nachfolgend noch eingegangen wird, und zusätzlich druckreduziertem Innenraum des Getriebegehäuses verlustleistungsärmer, da nämlich herkömmlich durch die geringere Dichte des Mediums im Getriebegehäuse nur im geringeren Maße eine Schichtung, wie sie oben beschrieben wurde, erfolgt und dadurch das ölreiche Medium die Verzahnungen der Stirnräder leichter erreichen kann. Durch die erfindungsgemäß vorgesehene Hüllwand wird die Schichtung der Medien künstlich eingestellt und verstärkt, auch bei einem Druck im Innenraum des Getriebegehäuses, der unterhalb des Umgebungsdruckes liegt.

Gemäß einer Ausführungsform der Erfindung ist ein Stirnradgetriebe mit wenigstens zwei verzahnten Stirnrädern vorgesehen, deren Verzahnungen in einem kämmenden Eingriff miteinander stehen, wobei die beiden Stirnräder jeweils über einer Drehachse drehbar sind. Auch hier ist eine Hüllwand vorgesehen, welche die beiden Stirnräder in Richtung der Drehachsen umschließt, wobei die Hüllwand eine Innenkontur aufweist, welche den Außendurchmessern der Stirnräder derart angepasst ist, dass sich zwischen der Hüllwand und den Stirnrädern zwei ineinander übergehende Ringspalte ergeben, wobei je ein Ringspalt zumindest im Wesentlichen konzentrisch zu je einer Drehachse angeordnet ist. Die Hüllwand kann nun die beiden Stirnräder in Umfangsrichtung gemeinsam vollständig oder auch nur teilweise umschließen, letzteres gemäß der zuvor dargestellten Ausführungsform der Erfindung. In jedem Fall ist gemäß der weiteren vorteilhaften Ausführungsform jedoch zusätzlich zu dem Vorsehen der Hüllwand der Innenraum eines Getriebegehäuses, in welchem die Stirnräder zusammen mit der Hüllwand angeordnet sind, mit einem Druck versehen, der gegenüber dem Umgebungsdruck, das heißt dem Druck in der äußeren Umgebung des Stirnradgetriebes außerhalb des Getriebegehäuses, reduziert ist.

Insbesondere ist zwischen dem Getriebegehäuse und einem Teil oder dem gesamten Umfang der Hüllwand ein Abstand vorgesehen, der durch den Innenraum gebildet wird. Im Innenraum ist zumindest im Betrieb des Stirnradgetriebes ein Luft-Schmiermittel-Gemisch, insbesondere ein Luft-Öl-Gemisch vorhanden, dessen Druck durch beispielsweise eine externe oder integrierte Vakuumpumpe reduziert wird.

Gemäß einer vorteilhaften Ausgestaltung der Erfindung mit teilgekapselten Stirnrädern erstreckt sich der aus der Hüllwand herausragende Teil des äußeren Umfangs der beiden Stirnräder über einen Bogen von jeweils 10° bis 180°, insbesondere von 90° bis 180°, die Grenzwerte eingeschlossen oder ausgeschlossen.

Beispielsweise ist der aus der Hüllwand herausragende Teil der Stirnräder auf der Unterseite der Stirnräder positioniert, bezogen auf den bestimmungsgemäßen Gebrauch des Stirnradgetriebes.

Die Ringspalte können beispielsweise eine Dicke von 1 bis 10 mm aufweisen, zumindest in dem Teil, in dem die Innenkontur der Hüllwand und der äußere Durchmesser der Stirnräder äquidistant beziehungsweise konzentrisch zueinander sind. Sind in den freien Endbereichen der Hüllwand in Umfangsrichtung radial um die Stirnräder betrachtet keilförmige Verjüngungen des Spaltes vorgesehen, wird die Spaltdicke in diesem Bereich gegenüber oben genanntem Bereich reduziert oder ein Spalt sogar vermieden.

Die Hüllwand weist in axialer Richtung vorzugsweise zumindest eine Erstreckung auf, die der axialen Erstreckung des teilweise unter Ausbildung eines Ringspaltes zu umschließenden Stirnrades entspricht. Denkbar ist auch eine Erstreckung in axialer Richtung darüber hinaus.

Besonders vorteilhaft ist es, wenn die Hüllwand gemäß einer ersten Ausbildung zumindest teilweise, vorzugsweise vollständig seitlich offen ausgebildet ist. In diesem Fall ist die Hüllwand als in Umfangsrichtung beabstandet zum Außendurchmesser der Stirnräder angeordnete Wandung ausgebildet, d.h. frei von in axialer Richtung bezogen auf das Stirnrad betrachtet angeordneten und mit dem in Umfangsrichtung um das jeweilige Stirnrad verlaufenden Teil der Hüllwand gekoppelten Seitenflächen oder Seitendeckeln.

Bei zumindest teilweiser seitlich offener Ausbildung der Hüllwand kann diese von einem in Umfangsrichtung um das jeweilige Stirnrad verlaufenden Wandbereich gebildet werden und mit diesem gekoppelten oder integral ausgebildeten seitlichen Wandbereichen. Die seitlichen Wandbereiche erstrecken sich dann vom in Umfangsrichtung um das jeweilige Stirnrad verlaufenden Wandbereich in radialer Richtung in Richtung zur Drehachse des jeweiligen Stirnrades hin, vorzugsweise lediglich über einen Bereich im Bereich des Außendurchmessers des jeweiligen Stirnrades. Die seitlichen Wandbereiche sind jeweils beabstandet zu den Stirnseiten des Stirnrades angeordnet. Die seitlichen Wandbereiche können dabei einteilig mit dem in Umfangsrichtung um das jeweilige Stirnrad verlaufenden Wandbereich ausgebildet sein oder aber als separate Bauteile, die mit diesem unter Ausbildung der Hüllwand verbunden sind. Die Verbindung kann kraftschlüssig, formschlüssig oder stoffschlüssig erfolgen. In beiden Fällen wird eine zahnradnahe Führung von Öl vermieden und ein seitlicher Übertritt in das Gehäuse erlaubt.

In einer vorteilhaften Weiterbildung können im Abstand in axialer Richtung zum in Umfangsrichtung um das jeweilige Stirnrad verlaufenden Wandbereich und damit auch den von der Hüllwand in Umfangsrichtung teilweise zu umschließenden Stirnrädern selbst sogenannte Seitenbleche vorgesehen werden, die frei von einer Verbindung bzw. Kopplung mit dem in Umfangsrichtung um das jeweilige Stirnrad verlaufenden Wandbereich sind. Die Aufgabe dieser Seitenbleche besteht im Wesentlichen darin, einen Übertritt von Schmiermittel aus dem Lagerbereich der Zahnräder in die Hüllwand, insbesondere den Spalt zwischen Zahnrad und Hüllwand zu verhindern. Diese Seitenbleche sind vorzugsweise derart gestaltet, dass diese in radialer Richtung des Zahnrades betrachtet auch den aus der Hüllwand herausragenden Teil des äußeren Umfangs des jeweiligen Stirnrads auf dessen Stirnseite abdecken. Wenn der herausragende Teil auf der Unterseite der Stirnräder positioniert ist, bedeutet dies, dass sich der oder die Seitenbleche weiter nach unten als die Hüllwand erstreckt/erstrecken.

In einer zweiten dazu alternativen Ausbildung kann an die Hüllwand auf jeder Stirnseite der Stirnräder ein die Stirnseite abdeckender Seitendeckel angeschlossen sein, wobei der Seitendeckel insbesondere auch den aus der Hüllwand herausragenden Teil des äußeren Umfangs des jeweiligen Stirnrads auf dessen Stirnseite abdeckt. Wenn der herausragende Teil auf der Unterseite der Stirnräder positioniert ist, bedeutet dies, dass sich der oder die Seitendeckel weiter nach unten als die Hüllwand erstreckt/erstrecken.

Bei dieser alternativen Ausbildung mit Seitendeckel kann jedes Stirnrad wenigstens eine Antriebswelle oder Abtriebswelle aufweisen, die durch wenigstens einen der Seitendeckel hindurchgeführt ist.

Gemäß einer weiteren Ausführungsmöglichkeit der alternativen Ausbildung mit Seitendeckel ist in wenigstens einem Seitendeckel oder in beiden Seitendeckeln im Bereich des gegenseitigen Eingriffs der Verzahnungen der beiden Stirnräder eine Öffnung vorgesehen. Diese kann beispielsweise dazu dienen, Schmiermittel aus dem von der Hüllwand umschlossenen Bereich der Stirnräder beziehungsweise aus den Ringspalten abzuführen.

Das Schmiermittel für die Stirnräder kann beispielsweise in den Zahneintritt oder bevorzugt Zahnaustritt der miteinander kämmenden Verzahnungen gespritzt werden. Hierfür können dort entsprechende Düsen vorgesehen sein.

Gemäß einer vorteilhaften Ausbildung der Ausführungsform mit Teilkapselung ist die Hüllwand an wenigstens einem Umfangsende oder an beiden Umfangsenden in Umfangsrichtung der Stirnräder keilförmig verjüngt ausgeführt. Das Ausbilden eines Keils an den Umfangsenden bewirkt, dass die Strömung des Luft-Schmiermittel-Gemisches in Radialrichtung von den Verzahnungen der Stirnräder weggeleitet wird. Somit wird verhindert, dass schmierstoffreiches Medium in den Ringspalt gesogen wird. Die Keile dienen sozusagen als Dichtung, um den Ringspalt gegenüber der Umgebung beziehungsweise gegenüber dem Innenraum des Getriebegehäuses abzudichten. Hierbei gilt zu beachten, dass sich die Stirnräder in der Regel im Bereich ihres von der Hüllwand abgedeckten Umfangs aufeinander zu und im Bereich des von der Hüllwand nicht abgedeckten Umfangs voneinander wegdrehen.

Die Dicke der Ringspalte ist vorteilhaft derart gewählt, dass eine radiale Geschwindigkeitskomponente des im Ringspalt strömenden Mediums reduziert wird. Medium, das bereits in Umfangsrichtung beschleunigt wurde, soll durch die Form der Innenkontur der Hüllwand eine möglichst konstante Geschwindigkeit aufweisen. Zugleich sollte die Dicke der Ringspalte nicht zu gering gewählt werden, da mit abnehmender Dicke die Relativgeschwindigkeiten im Medium zunehmen und damit der Verlust ansteigt.

Ein Stirnradgetriebe kann als zwei- oder mehrwelliges Stirnradgetriebe ausgebildet sein. Im letztgenannten Fall ist eine Mehrzahl von um jeweils eine Drehachse dreh bare Stirnräder vorgesehen. Jedes der Stirnräder steht mit wenigstens einem anderen der Stirnräder kämmend in Eingriff. Die Hüllwand ist um wenigstens einen Teilbereich jedes der Stirnräder verlaufend ausgebildet, wobei die Drehachsen einzelner oder aller Stirnräder in einer gemeinsamen Teilfuge des Getriebegehäuses angeordnet sind. Die Hüllwand erstreckt sich in diesem Fall vorzugsweise in Einbaulage des Getriebes in axialer Richtung betrachtet von einem ersten axial äußeren Stirnrad um den Außenumfang der Stirnradkonfiguration unter Ausbildung von Ringspalten zwischen Innenumfang der Hüllwand und den einzelnen Stirnrädern zum zweiten, in axialer Richtung äußeren Stirnrad.

Die Hüllwand kann dabei je nach Getriebekonfiguration ein- oder mehrteilig ausgebildet sein, wobei die einzelnen Hüllwandteile kraft-, form- oder stoffschlüssig miteinander verbunden sind.

In einer alternativen Ausbildung ist die Hüllwand von einem mehrteiligen Gehäuse gebildet, welches wenigstens zwei Gehäuseteile umfasst, die unter Ausbildung eines Spaltes beabstandet zueinander entlang einer theoretischen Teilfuge angeordnet und jeweils separat in/an einem das Stirnradgetriebe aufnehmenden Getriebegehäuse unter Ausbildung der Funktionseinheit Hüllwand gelagert sind. In diesem Fall umfasst das Gehäuse vorzugsweise zumindest ein Oberteil und ein Unterteil, die im Bereich der theoretischen Teilfuge beabstandet zueinander unter Ausbildung eines Spaltes frei von einer Verbindung miteinander angeordnet sind, wobei die theoretische Teilfuge sich teilweise oder vollständig im Wesentlichen innerhalb einer Ebene erstreckt, in welcher eine der beiden Drehachsen) verläuft oder die beiden Drehachsen verlaufen.

Bei den Ausführungen laufen die Stirnräder nicht im Ölsumpf, d.h. die Getriebekonfiguration ist frei von einem direkten Kontakt der Stirnräder mit dem

Ölsumpf. Auch bei mehrwelliger Ausführung ragt zumindest eines der Stirnräder wenigstens teilweise aus der Hüllwand heraus.

In einer vorteilhaften Anwendung integriert ein erfindungsgemäß Stirnradgetriebe An- und/oder Abtriebsaggregate durch Verbindung mit den einzelnen mit den Stirnrädern verbundenen Wellen zu einem Maschinenstrang unter Ausbildung einer Getriebeturbomaschine. Als Antriebsaggregate sind für sich allein oder in Kombination Dampfturbinen, Gasturbinen, Expander sowie Motoren möglich und als Abtriebsaggregate sind für sich allein oder in Kombination Kompressoren sowie Generatoren möglich. Die Getriebeturbomaschinen sind somit als Getriebeverdichter oder Expanderanlage oder eine Kombination aus beiden ausgebildet. Im Allgemeinen ist eine komplette Getriebeturbomaschine als Strang ausgebildet, wobei über das Getriebe in Abhängigkeit der Ausbildung der Getriebeturbomaschine die An- und Abtriebsaggregate, insbesondere Dampfturbinen, Gasturbinen, Expander sowie Motoren und Kompressoren miteinander prozesstechnisch zusammenwirken.

Die Erfindung soll nachfolgend anhand eines Ausführungsbeispiels und den Figuren exemplarisch beschrieben werden.

Es zeigen:
- Figur 1: einen schematischen Axialschnitt durch ein erfindungsgemäß ausgeführtes Stirnradgetriebe mit Teilkapselung;
- Figur 2: eine schräge Draufsicht auf die teilgekapselten Stirnräder aus der Figur 1, jedoch hier mit zusätzlichen optionalen Seitendeckeln versehen;
- Figur 3: eine schematische Darstellung einer möglichen Teilkapselung der Stirnräder mit einem diese umschließenden Getriebegehäuses;
- Figur 4: eine alternative Ausführungsform zu der Figur 3, bei welcher die Stirnräder übereinander positioniert sind;
- Figur 5: eine schematische Darstellung mit der Trennung der Kühlung und Schmierung der Stirnräder beziehungsweise von deren Verzahnungen;
- Figur 6: ein Ausführungsbeispiel einer Kühleinrichtung mit Berieselungseinrichtung und Stegen auf der Hüllwand;
- Figur 7: die Ausgestaltung gemäß der Figur 6 jedoch ohne Getriebegehäuse;
- Figur 8: eine dreidimensionale Draufsicht schräg unten auf die Hüllwand;
- Figur 9: einen Querschnitt durch die Hüllwand im Bereich einer Wartungsöffnung;
- Figur 10: einen weiteren Querschnitt durch die Hüllwand, das Getriebegehäuse und ein Stirnrad;
- Figur 11: eine mögliche profilierte Oberfläche der Hüllwand zur Reduzierung der Strömungsgeschwindigkeit des Kühlmittelstromes;
- Figur 12: eine Ausgestaltung der Hüllwand mit Hohlprofilen, um die Kühlkanäle innerhalb der Hüllwand auszubilden;
- Figur 13: eine Ausgestaltung mit in der Hüllwand integriertem Wärmetauscher;
- Figur 14: zeigt eine dreiwellige Ausführung eines Stirnradgetriebes;
- Figur 15: zeigt beispielhaft eine vierwellige Ausführung eines Stirnradgetriebes;
- Figur 16a: zeigt eine Ausführung gemäß Figur 15 mit vertikal versetztem Stirnrad;
- Figur 16b: zeigt die Ausbildung des Stirnradgetriebes als Integralgetriebe in einer Getriebeturbomaschine;
- Figur 17: verdeutlicht beispielhaft eine weitere Ausbildung eines mehrwelligen Stirnradgetriebes mit Teilkapselung.

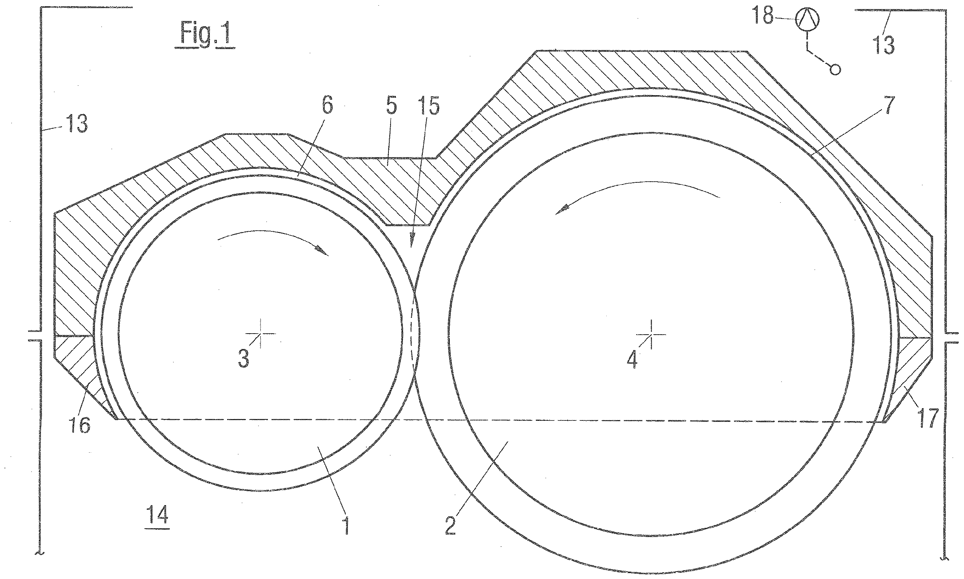

In der Figur 1 ist ein Stirnradgetriebe mit einem ersten Stirnrad 1 und einem zweiten Stirnrad 2 dargestellt, die beispielsweise als schrägverzahnte oder doppelschrägverzahnte Stirnräder ausgeführt sind. Wie man sieht, stehen die Verzahnungen der beiden Stirnräder 1, 2 in einem kämmenden Eingriff miteinander, sodass das erste Stirnrad 1, wenn es über seiner Drehachse 3 umläuft, das zweite Stirnrad 2 über dessen Drehachse 4 antreibt oder umgekehrt. Die Drehrichtung der Stirnräder 1, 2 ist durch die Pfeile angezeigt.

Es ist eine die Stirnräder 1, 2 eng umschließende Hüllwand 5 vorgesehen, wobei sich die Hüllwand 5 jedoch nur über einen Teil des Umfangs der beiden Stirnräder 1, 2 erstreckt, sodass ein Teil des äußeren Umfangs der Stirnräder 1, 2 gegenüber einem Innenraum 14 des hier nur schematisch dargestellten Getriebegehäuses 13 freiliegt. Im gezeigten Ausführungsbeispiel ragt der Teil des äußeren Umfangs der beiden Stirnräder 1, 2 auf der Unterseite der Stirnräder 1, 2 aus der Hüllwand 5 heraus.

Im übrigen Bereich der Umfänge der beiden Stirnräder 1, 2 bildet die Innenkontur der Hüllwand 5 mit den Außendurchmessern der Stirnräder 1, 2 zwei ineinander übergehende Ringspalte 6, 7 aus, die bis auf den Bereich des Eingriffsbereichs 15 der Verzahnungen eine konstante Dicke über dem Umfang der Stirnräder 1, 2 aufweisen.

Im gezeigten Ausführungsbeispiel erstreckt sich der aus der Hüllwand 5 herausragende Teil des äußeren Umfangs der beiden Stirnräder 1, 2 über jeweils einen Bogen von annähernd 180°, wobei die Differenz zu 180° durch zwei Keile 16, 17 an den beiden Umfangsenden der Hüllwand 5 abgedeckt wird, das heißt, dass die Hüllwand 5 an ihren beiden Umfangsenden keilförmig verjüngt ausgeführt ist. Wie man sich aufgrund der eingezeichneten Drehrichtungen der Stirnräder 1, 2 vorstellen kann, bewirkt diese keilförmige Verjüngung ein Umleiten
der Strömung in Radialrichtung weg von den Stirnrädern 1, 2 im Bereich des Eintauchens der Stirnräder 1, 2 in die Hüllwand 5.

Mit der gestrichelten Linie und der im Querschnitt gezeigten Hüllwand 5 ist die Projektionsfläche begrenzt, aus welcher die beiden Stirnräder 1, 2 herausragen. Wie man sieht, weist somit die Hüllwand 5 nicht nur einfach unten eine Öffnung auf, durch welche hindurch die Stirnräder 1, 2 von außen ersichtlich sind, sondern die Stirnräder 1, 2 ragen mit ihrem äußeren Umfang aus der Hüllwand 5 heraus. Innerhalb des Innenraums 14 kann im Getriebegehäuse 13 unten ein Schmiermittelsumpf beziehungsweise Ölsumpf vorgesehen sein, der hier nicht näher dargestellt ist, da er einen entsprechenden Abstand von der Unterseite der Stirnräder 1, 2 aufweist. Ferner kann eine Absaugvorrichtung, das heißt eine Vakuumpumpe, vorgesehen sein, die mit ihrer Saugseite an dem Innenraum 14 angeschlossen ist, um diese zu besaugen. Eine solche Vakuumpumpe ist nur schematisch dargestellt und mit dem Bezugszeichen 18 bezeichnet. Die Erfindung kann jedoch auch ohne eine solche Vakuumpumpe ausgeführt werden.

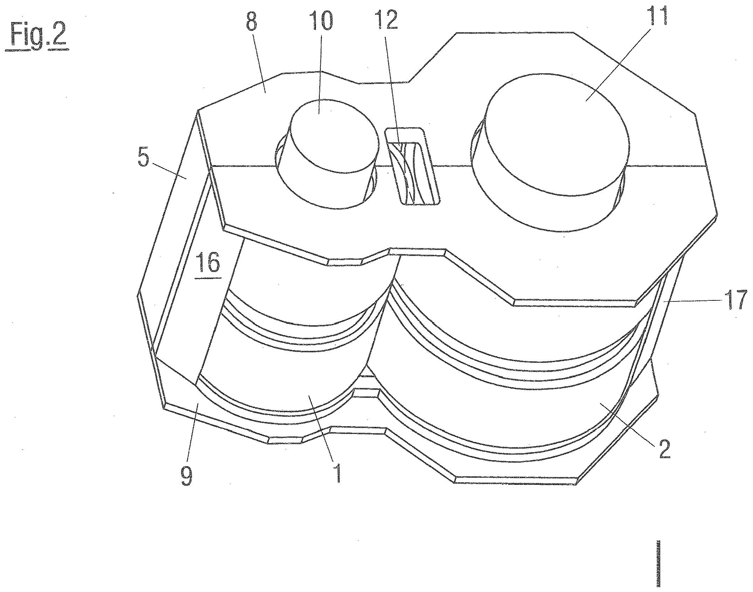

Bei der Ausgestaltung gemäß Figur 1 sind insbesondere keine an der Hüllwand 5 angeschlossenen Seitendeckel vorgesehen. Vielmehr werden die Stirnräder 1, 2 durch die Hüllwand 5 nur auf ihrem äußeren Umfang umschlossen. Bei der Ausgestaltung gemäß Figur 2 wird die Hüllwand 5 aus der Ausgestaltung gemäß Figur 1 mit Seitendeckeln 8, 9 kombiniert, wobei dies jedoch nicht zwingend ist.

In der Figur 2 sind in perspektivischer Ansicht einer Ausführung mit Teilkapselung beispielhaft seitlich an der Hüllwand 5 angeschlossene Seitendeckel 8, 9 dargestellt. Wie man sieht, decken diese auch den aus der Hüllwand 5 nach unten herausragenden Teil des äußeren Umfangs der Stirnräder 1, 2 ab.

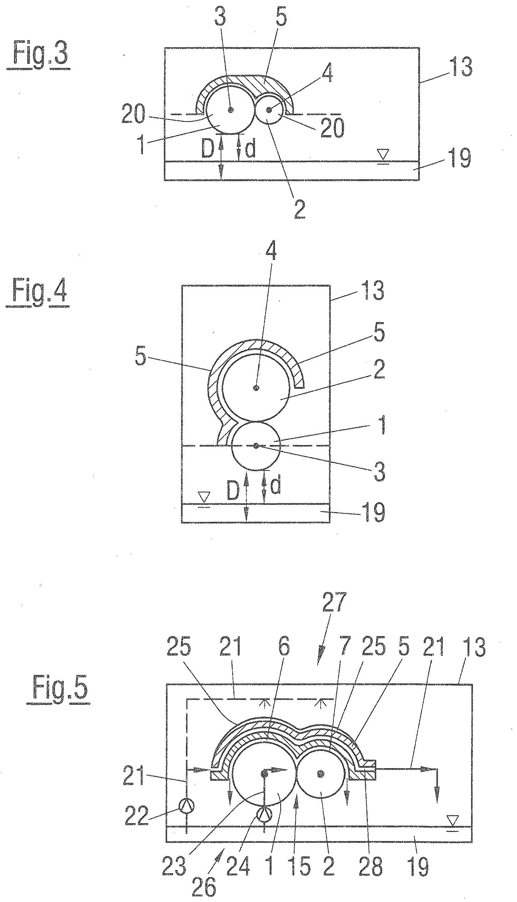

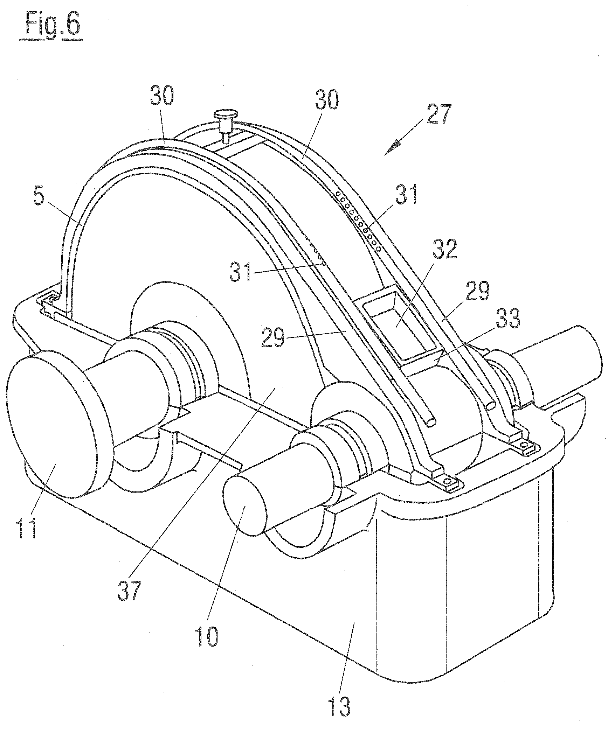

Es ist jedoch in einer besonders vorteilhaften - in Figur 2 nicht dargestellten Ausbildung - vorgesehen, die Hüllwand 5 frei von diesen Seitendeckeln 8, 9, wie in den Figuren 6 bis 13 beispielhaft wiedergegeben und auch für die Figuren 3 bis 5 vorgesehen, auszubilden oder diese nur sich über einen Teilbereich der radialen Erstreckung der Stirnräder 1, 2 ausgehend vom radialen Innenumfang der Hüllwand 5 im Bereich des Außendurchmessers erstreckend auszubilden. Die Seitendeckel 8,9 sind in diesem letztgenannten Fall als separate Bauteile oder aber integral mit dem radialen Wandbereich ausgebildet.

Die Hüllwand 5 beschreibt somit zumindest einen ein- oder mehrteilig ausgebildeten Wandbereich der in Umfangsrichtung die Stirnräder 1, 2 zumindest teilweise in Umfangsrichtung unter Ausbildung eines Spaltes umschließt. Dieser Wandbereich ist durch eine axiale Erstreckung bezogen auf die Richtung des Verlaufs der Drehachse des jeweils zu umschließenden Stirnrades 1, 2 charakterisiert, die zumindest der axialen Erstreckung des jeweiligen Stirnrades entspricht. Ausführungen mit in axialer Richtung überstehender Hüllwand 5 sind ebenfalls denkbar und bei Vorsehen von seitlichen Wandbereichen auch erforderlich.

Das erste Stirnrad 1 weist eine Antriebswelle 10 und das zweite Stirnrad 2 weist eine Abtriebswelle 11 auf. Beide Wellen 10, 11 sind durch die Seitendeckel 8 hindurchgeführt. Bein einem zweiten Stirnrad 2, das das erste Stirnrad 1 antreibt, wären die Wellen 10, 11 entsprechend vertauscht.

Ferner ist bei Ausführung gemäß Figur 2 in dem Seitendeckel 8 und insbesondere auch in dem Seitendeckel 9 im Bereich des gegenseitigen Eingriffs der Verzahnungen der beiden Stirnräder 1, 2 eine Öffnung 12 vorgesehen. Diese dient dem Abführen von Kühlmittel.

Aus der Figur 2 erkennt man auch , dass im gezeigten Ausführungsbeispiel jedes Stirnrad 1, 2 zwei Verzahnungen aufweist, die in Axialrichtung nebeneinander und insbesondere mit Abstand zueinander positioniert sind, um eine Doppelverzahnung, insbesondere eine Doppelschrägverzahnung auszubilden.

In der Figur 3 ist nochmals schematisch eine Ausführungsform eines erfindungsgemäßen Stirnradgetriebes gemäß einer bevorzugten Ausgestaltung mit Teilkapselung gezeigt. Hier umschließt die Hüllwand 5 jeweils die obere Hälfte der beiden Stirnräder 1, 2 und endet somit in einer durch die Drehachsen 4, 5 verlaufenden horizontalen Ebene, siehe die gestrichelte Linie.

Unten im Getriebegehäuse 13, welches die beiden Stirnräder 1, 2 und die Hüllwand 5 umschließt, ist der Ölsumpf 19 schematisch dargestellt. Man erkennt, dass die aus der Hüllwand 5 herausragenden Teile 20 der Stirnräder 1, 2, das heißt die Teile 20, die unterhalb der durch die gestrichelte Linie gezeigten Ebene, in welcher die Hüllwand 5 endet, positioniert sind, einen Abstand D zum Getriebegehäuse 13 und auch einen Abstand d zum Ölsumpf 19 aufweisen, wobei die beiden Stirnräder 1, 2 in diesem Bereich frei gegenüber dem Ölsumpf 19 positioniert sind, insbesondere ohne zwischengeschaltete, die Stirnräder 1, 2 abdeckende Bauteile. Somit kann Schmieröl leicht aus den Verzahnungen der Stirnräder 1, 2 in den Ölsumpf 19 abgeführt werden, insbesondere durch freies Abspritzen.

In der Figur 4 ist eine alternative Ausführungsform in einer ähnlichen Darstellung wie jene der Figur 3 gezeigt. Abweichend sind hier die Stirnräder 1, 2 übereinander positioniert. Bezüglich der dargestellten Bauteile wird auf die Figur 3 und die entsprechenden Bezugszeichen verwiesen.

In der Figur 4 ist das obere Stirnrad, hier das zweite Stirnrad 2, zu drei Viertel, das heißt annähernd über 270° von der Hüllwand 5 umschlossen, das untere Stirnrad, hier das erste Stirnrad 1, ist über einem Viertel seines Umfangs, das heißt über annähernd 90° von der Hüllwand 5 umschlossen. Demnach ragt die untere Hälfte des ersten Stirnrades 1 aus der Hüllwand 5 nach unten heraus, siehe auch hier wieder die gestrichelte Linie, welche die Ebene zeigt, in welcher die Hüllwand 5 von oben endet. Auch die Abstände d, D des unteren Stirnrades 1 zum Ölsumpf 19 beziehungsweise dem Getriebegehäuse 13 betragen, wie bei der Ausführungsform gemäß der Figur 3, wiederum ein Vielfaches des Abstandes zwischen den Stirnrädern 1, 2 und der Hüllwand 5 im Bereich der Umschließung beziehungsweise Kapselung.

In der Figur 5 ist ein wichtiger Aspekt der vorliegenden Erfindung dargestellt, nämlich die Trennung der Kühlung der Stirnräder 1, 2 von der Schmierung der Stirnräder 1, 2. So wird ein erster Ölvolumenstrom zur Kühlung der Stirnräder 1, 2 durch die Hüllwand 5 geleitet. Dieser erste Ölvolumenstrom ist mit 21 bezeichnet. Schematisch ist zur Förderung dieses ersten Ölvolumenstroms 21 eine erste Ölpumpe 22 angedeutet, welche das Öl aus dem Ölsumpf 19 fördert. Dies ist jedoch nicht zwingend notwendig, so könnte auch ein anderes Kühlmittel oder eine andere Förderung vorgesehen sein. Zusätzlich oder alternativ kann, wie durch die gestrichelte Linie angedeutet ist, die Hüllwand 5 auch durch Berieselung mit dem ersten Ölvolumenstrom 21 gekühlt werden. Vorliegend ist schematisch ein Kühlkanal 28 dargestellt, der innerhalb der Hüllwand 5 verläuft. Wie man sieht, folgt der Verlauf des Kühlkanals 28 dem Verlauf der Innenkontur der Hüllwand 5, was jedoch nicht zwingend ist. Auch könnte auf einen solchen Kühlkanal 28 vollständig verzichtet werden und das Kühlmittel ausschließlich entlang der äußeren Oberfläche der Hüllwand 5 geleitet werden.

Zur Schmierung der Stirnräder 1, 2 wird ein zweiter Ölvolumenstrom 23 in die Verzahnungen der Stirnräder 1, 2 geleitet, vorteilhaft in den Eingriffsbereich 15 der Verzahnungen, beispielsweise durch eine oder mehrere Öffnungen 12, wie sie in der Figur 2 dargestellt ist. Dieser zweite Ölvolumenstrom 23 wird beispielsweise mittels einer zweiten Ölpumpe 24 aus dem Ölsumpf 19 gefördert. Auch hier kommt jedoch auch eine andere Förderung oder eine andere Quelle in Betracht.

Die Bauteile beziehungsweise Merkmale zur Schmierung der Stirnräder 1, 2 bilden eine Schmiereinrichtung 26, wohingegen die Bauteile und Merkmale zur Kühlung der Hüllwand 5 und damit indirekt der Stirnräder 1, 2 eine Kühleinrichtung 27 bilden.

Der erste Ölvolumenstrom 21 und der zweite Ölvolumenstrom 23 können auch mittels einer gemeinsamen Ölpumpe gefördert werden, wobei jedoch in allen Fällen vorteilhaft der erste Ölvolumenstrom 21 größer als der zweite Ölvolumenstrom 23 ist, insbesondere ein Vielfaches hiervon beträgt.

Der zweite Ölvolumenstrom 23 kann vorteilhaft frei von den Stirnrädern 1, 2 abspritzen, während der erste Ölvolumenstrom 21 in der Regel aus wenigstens einer entsprechenden Öffnung aus der Hüllwand 5 austritt oder, bei einer Berieselung der Hüllwand 5, von der Hüllwand 5 abläuft beziehungsweise abtropft. Durch die aktive Kühlung der Hüllwand 5 können die Stirnräder 1, 2 im Unterschied zu einer direkten Kühlung mittelbar durch Wärmeübertragung über die Ringspalte 6, 7 in die Hüllwand 5 gekühlt werden. Dies ermöglicht, dass ein vergleichsweise kleiner Schmierölvolumenstrom, hier zweiter Ölvolumenstrom 23, durch die Ringspalte 6, 7 und/oder den Eingriffsbereich 15 der Verzahnung gefördert wird, was die Verluste reduziert.

Im gezeigten Ausführungsbeispiel ist ferner schematisch eine Kühlung der Hüllwand 5 durch Kühlrippen 25 außen auf der Hüllwand 5 gezeigt.

In den Figuren 6 bis 13 ist die dargestellte Hüllwand 5 mit einer axialen Erstreckung ausgebildet, die zumindest der axialen Erstreckung eines Stirnrades 1 oder 2 entspricht, wobei die Hüllwand 5 in axialer Richtung betrachtet innerhalb des Erstreckungsbereiches des Stirnrades 1 bzw. 2 angeordnet ist. Denkbar wäre auch ein seitliches Überragen in axialer Richtung. Die Hüllwand 5 ist in radialer Richtung beabstandet zum Außenumfang des jeweiligen Stirnrades 1 oder 2 angeordnet.

In der Figur 6 ist nochmals die Positionierung der Hüllwand 5 innerhalb des Getriebegehäuses 13, von welchem nur der Unterteil dargestellt ist, gezeigt. Es werden wieder die entsprechenden Bezugszeichen für die verschiedenen Bauteile verwendet, wobei auf eine wiederholte Beschreibung verzichtet wird.

In dem in der Figur 6 gezeigten Ausführungsbeispiel umfasst die Kühleinrichtung zwei entlang der Außenseite der Hüllwand 5 verlaufende kühlmittelführende Rohre 30, die sich im gezeigten Ausführungsbeispiel parallel gegenüberstehen, was jedoch nicht zwingend ist. Vorteilhaft verlaufen die Rohre 30 beidseitig in etwa radial außerhalb der Stirnseiten der Stirnräder 1, 2. Die Rohre 30 weisen Auslassöffnungen 31 auf, über welche Kühlmittel auf den äußeren Umfang der Hüllwand 5 gesprüht oder gerieselt werden kann. Aufgrund der Anordnung der Rohre 30 und der Auslassöffnung 31 erfolgt eine gleichmäßige Benetzung des äußeren Umfangs der Hüllwand 5 und das aufgesprühte Kühlmittel läuft entlang des äußeren Umfangs außen auf der Hüllwand 5 ab, wobei es Wärme der Hüllwand 5 aufnimmt.

Um ein Abströmen oder Abtropfen des Kühlmittels seitlich von der Hüllwand 5 über die Stirnseiten der Stirnräder 1, 2 hinweg auf rotierende Teile, besonders die Wellen 10, 11 zu vermeiden, sind Stege 29 vorgesehen, die dies verhindern. Die Stege 29 verleihen einerseits der Hüllwand 5 Stabilität und stellen andererseits eine Barriere für das außen auf der Hüllwand 5 strömende Kühlmittel dar. Vorteilhaft ist die Höhe der Stege 29 derart bemessen, dass sie wenigstens so hoch wie die Rohre 30 sind, das heißt bis zu deren Oberseite reichen.

Im Bereich oberhalb des Eingriffsbereichs der Verzahnungen ist in der Hüllwand 5 eine Wartungsöffnung 32 vorgesehen, die von Seitenwänden 33 derart umschlossen wird, dass kein Kühlmittel, das über die Außenseite der Hüllwand 5 strömt, in die Wartungsöffnung 32 eintreten kann. Die Wartungsöffnung 32 kann, obwohl hier nicht dargestellt, mit einem Deckel verschließbar sein. Dies ist jedoch nicht zwingend.

In der Figur 6 erkennt man ferner Seitenbleche 37 als Abschirmbleche, die mit Abstand zu den Stirnseiten der Stirnräder 1, 2 positioniert sind, insbesondere in der unteren Gehäusehälfte eingelegt oder montiert sind.

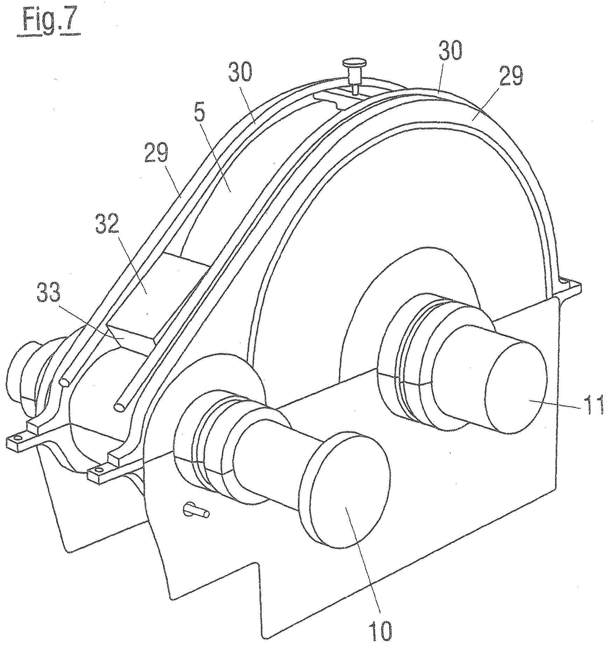

In der Figur 7 ist die Ausgestaltung der Figur 6 nochmals ohne Getriebegehäuse dargestellt. Man erkennt besonders, dass die Wartungsöffnung 32 oberhalb des Eingriffsbereichs der Verzahnungen vorgesehen ist, in welchem die Hüllwand 5 zur Ausbildung der Ringspalte eine konkave Kontur aufweist.

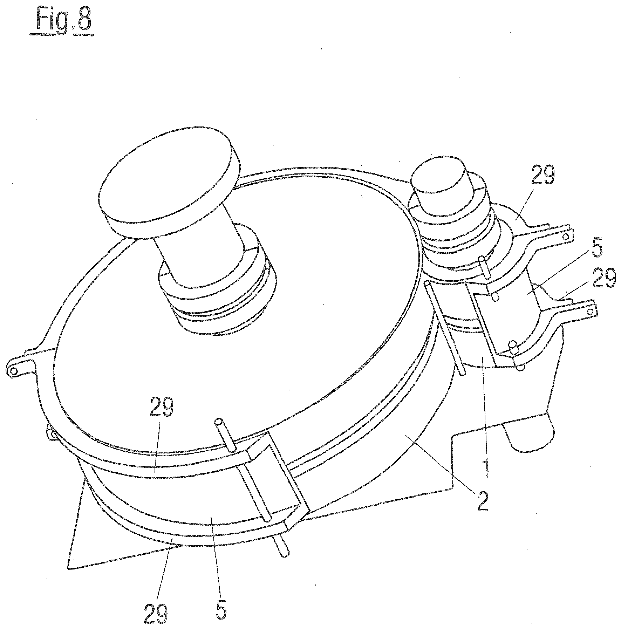

Aus der Figur 8 wird nochmals ersichtlich, dass die Hüllwand 5, die die Stege 29 auch auf ihrer Unterseite aufweist, die Stirnräder 1, 2 nicht vollständig umschließt. Zugleich erkennt man, dass die in den Figuren 6 und 7 dargestellten Rohre 30 sich nicht bis auf die Unterseite der Hüllwand 5 erstrecken, sondern nur im oberen Bereich derselben.

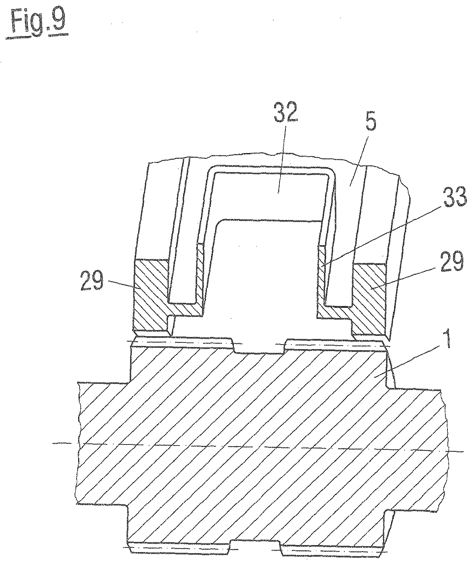

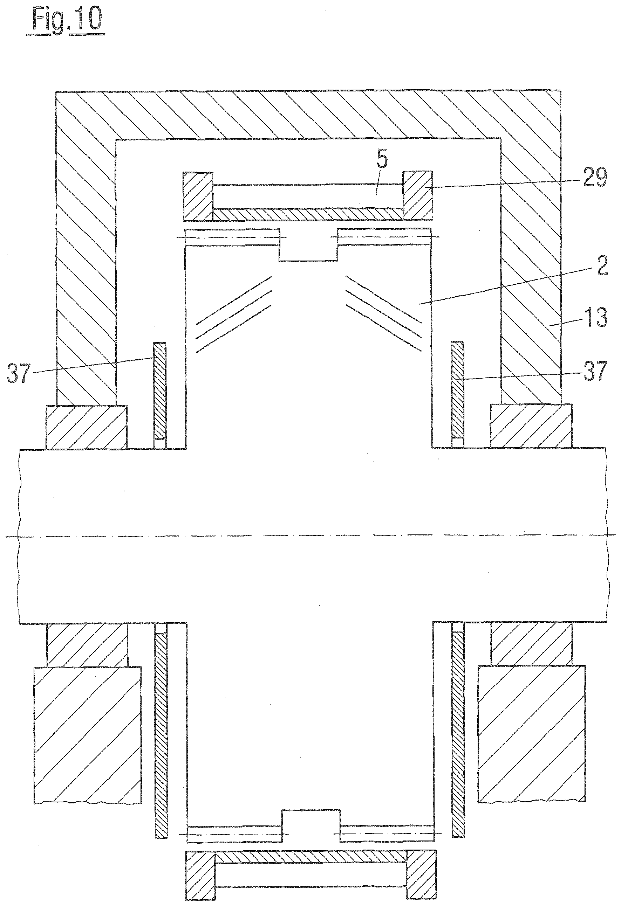

Die Figuren 9 und 10 zeigen Schnittdarstellungen durch das Stirnradgetriebe und insbesondere die Hüllwand 5.

In der Figur 9 sind nochmals die Stege 29 sowie die Seitenwände 33 der Wartungsöffnung 32 erkennbar. Wie man sieht, können die Stege 29 vorteilhaft auch von der Hüllwand 5 radial nach innen hervorstehen.

In der Figur 10 ist ein entsprechender, jedoch umfassenderer Schnitt im Bereich des Stirnrades 2 gezeigt, jedoch außerhalb der Wartungsöffnung. Ferner ragen bei diesem Ausführungsbeispiel die Stege 29 nur radial nach außen aus der Hüllwand 5 hervor. Dies könnte jedoch auch anders sein.

Erkennbar sind ferner Seitenbleche 37, die mit Abstand zum Stirnrad 2, insbesondere den Stirnseiten des Stirnrades 2 angeordnet sind und der Abschirmung des Getriebes von den Lagern dienen sollen. Ein Übertritt von Lageröl in die Hüllwand 5 bzw. die zwischen dieser und den Stirnrädern 1,2 gebildeten Ringspalte wird sicher vermieden.

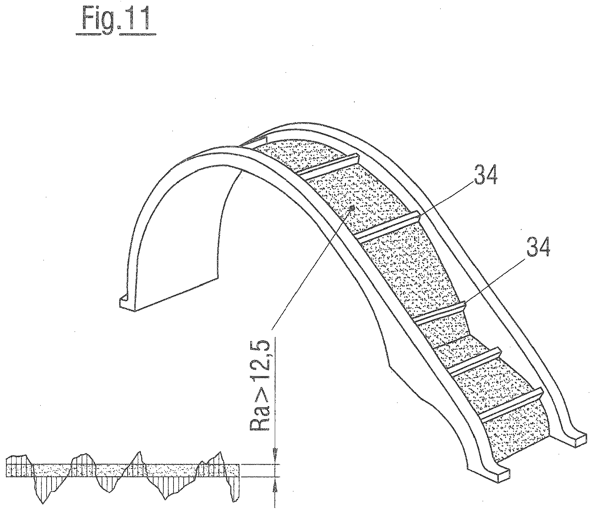

In der Figur 11 ist eine mögliche Gestaltung der äußeren Oberfläche der Hüllwand 5 dargestellt, um eine Strömungsgeschwindigkeit des Kühlmittels entlang der äußeren Oberfläche der Hüllwand 5 zu reduzieren. Beispielsweise sind Vorsprünge oder Stufen 34 vorgesehen, über welche das aufgespritzte Kühlmittel strömen muss. Auch ist die mit dem Kühlmittel benetzte äußere Oberfläche der Hüllwand 5 besonders rau gestaltet, beispielsweise mit einer mittleren Rauheit Rₐ von 12,5 oder mehr.

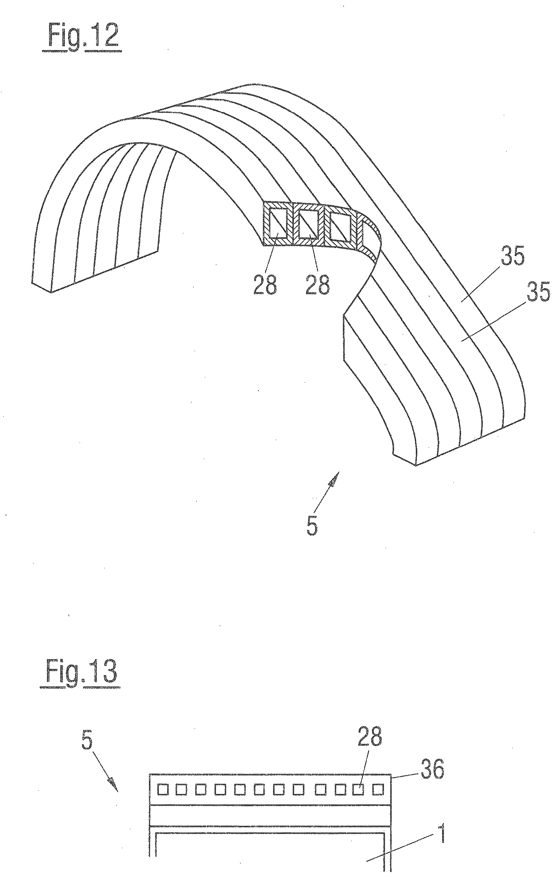

Beim Ausführungsbeispiel gemäß der Figur 12 ist die Hüllwand 5 durch ein oder mehrere Hohlprofile 35 gebildet, von denen jedes einen oder mehrere Kühlkanäle 28 aufweist. So kann ein einziges Hohlprofil 35 mit einem einzigen Kühlkanal 28 zur Ausbildung der Hüllwand 5, zumindest des zu kühlenden Abschnitts desselben, vorgesehen sein. Jedoch kann auch ein Hohlprofil 35 mit mehreren Kühlkanälen, insbesondere parallel zueinander gerichteten Kühlkanälen, vorgesehen sein. Schließlich können auch mehrere Hohlprofile mit jeweils einem oder mehreren Kühlkanälen zur Ausbildung der Hüllwand 5 zusammengefügt sein.

Beim Ausführungsbeispiel gemäß der Figur 12 stellt somit die Hüllwand 5 sozusagen einen Wärmetauscher dar. Alternativ kann, wie in der Figur 13 dargestellt ist, auch ein Wärmetauscher außen auf der Hüllwand 5 angeschlossen sein, um über einen insbesondere massiven Teil der Hüllwand 5, der die Innenkontur ausbildet, Wärme durch Wärmeleitung dem Wärmetauscher 36 zuzuführen und anschließend mit dem durch die Kühlkanäle 28 strömenden Kühlmittel abzuführen.

Die erfindungsgemäßen Möglichkeiten zur Kühlölförderung und Führung bei einer Hüllwand mit Teilkapselung der Stirnräder in Umfangsrichtung sind besonders vorteilhaft für eine Ausbildung der Hüllwand 5 mit oder frei von seitlich zum Stirnrad 1, 2 angeordneten Wandbereichen, d.h. Seitenblechen 8, 9, die mit dem in Umfangsrichtung verlaufenden Wandbereich integral ausgebildet oder aber verbunden sind.

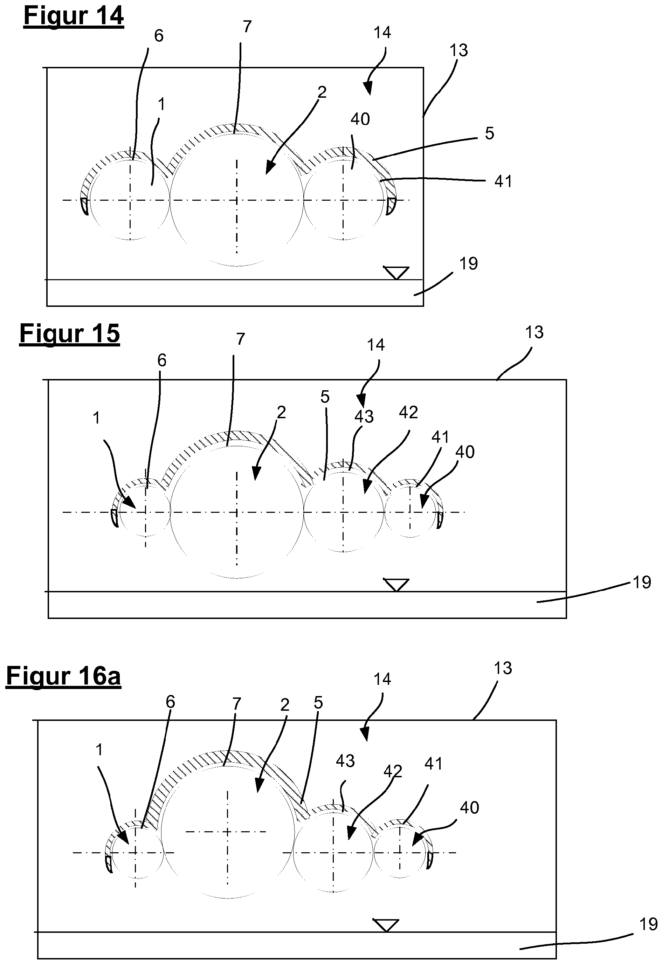

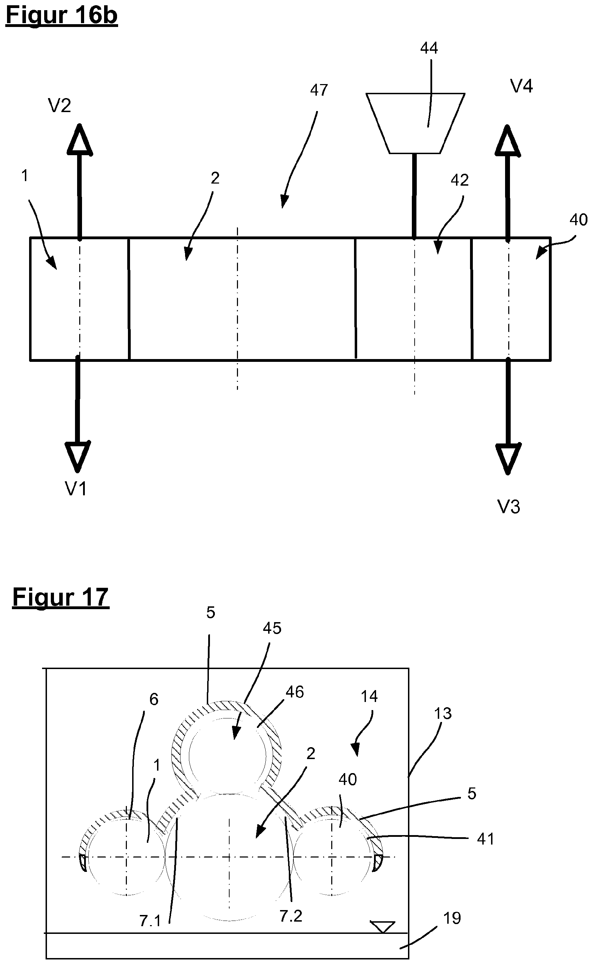

Zeigen die Figuren 1 bis 10 erfindungsgemäße Ausführungen eines Stirnradgetriebes mit zwei miteinander in Eingriff stehenden Stirnrädern 1, 2, versteht es sich, dass diese Art der Teilkapselung mit Kühlölführung ebenfalls für Ausführungen von Stirnradgetrieben mit mehreren Stirnrädern zum Einsatz gelangen kann. Derartige mehrwellige Stirnradgetriebe sind in einer besonders vorteilhaften Anwendung als sogenannte Integralgetriebe ausgeführt und werden in Getriebeturbomaschinen bzw. sogenannten Getriebeverdichtern eingesetzt. Beispiele für mehrwellige Stirnradgetriebe mit zumindest drei Stirnrädern sind in den Figuren 14 bis 16a und 17 schematisiert vereinfacht wiedergegeben. Ein Beispiel für eine Getriebeturbomaschine 47 ist in Figur 16b wiedergegeben. Die Getriebestrukturen können mit den vorgenannten Ausbildungen der Kühlmittelführung ausgeführt sein. Um Wiederholungen zu vermeiden, wird auf die Darstellung und Beschreibung dieser verzichtet und lediglich die beispielhaften Getriebestrukturen beschrieben.

Beispielhaft zeigt Figur 14 eine Ausführung mit einem dreiwelligen Stirnradgetriebe, wobei hier zwei Stirnräder in Form von Ritzeln mit einem Großrad in Eingriff stehen. Das Großrad wird vom Stirnrad 2 gebildet, während das Stirnrad 1 von einem mit diesem in Eingriff stehenden Ritzel gebildet ist. Das weitere mit dem Großrad in Eingriff stehende Stirnrad 40 ist ebenfalls als Ritzel ausgeführt. Dabei kann es sich bei den Ritzeln um An- oder Abtriebsritzel handeln oder aber beide Ritzel werden über das Großrad angetrieben. Der zwischen dem Außenumfang des Stirnrades 40 und Innenumfang der Hüllwand 5 gebildete Ringspalt ist mit 41 bezeichnet. Die einzelnen Stirnräder sind mit ihren Drehachsen in einer Ebene angeordnet. Die Lagerung kann daher in einer ebenen Teilfuge des Getriebegehäuses 13 erfolgen. Die Hüllwand 5 umschließt die einzelnen Stirnräder 1, 2, 40 jeweils um einen Teilbereich ihres Außenumfanges in Umfangsrichtung derart, dass die Ritzel und auch das Großrad in vertikaler Richtung betrachtet nach unten bzw. in Richtung des Ölsumpfes 19 weisend aus der Hüllwand 5 hinausragen.

Die Figur 15 verdeutlicht eine Weiterbildung einer Ausführung gemäß Figur 14 mit in einer Teilfuge des Gehäuses 13 angeordneten Drehachsen der Stirnräder eines mehrwelligen Stirnradgetriebes. Im dargestellten Fall ist zwischen dem Stirnrad 40 in Form des Ritzels und dem als Großrad ausgebildeten Stirnrad 2 ein weiteres Stirnrad 42 in Form eines Zwischenrades vorgesehen. Diese Zwischenrad ist vorzugsweise mit einer Antriebswelle gekoppelt. Die beiden Ritzel fungieren als Abtriebsritzel. Andere Konstellationen sind je nach Einsatzfall denkbar.

Die Figur 16a verdeutlicht eine Weiterbildung einer Ausführung gemäß Figur 15, wobei das Großrad in vertikaler Richtung in Einbaulage betrachtet gegenüber der Teilfuge zur Lagerung der Stirnräder 1, 40, 42 (Ritzel und Zwischenrad) versetzt angeordneter Drehachse des Großrades. Die Figur 16b verdeutlicht für eine derartige Getriebeausführung den Einsatz in einer Getriebeturbomaschine 47. Diese integriert über das Stirnradgetriebe An- und/oder Abtriebsaggregate zu einem Maschinenstrang. Als Antriebsaggregate sind für sich allein oder in Kombination Dampfturbinen, Gasturbinen, Expander sowie Motoren möglich und als Abtriebsaggregate sind für sich allein oder in Kombination Kompressoren sowie Generatoren möglich. Die Getriebeturbomaschinen sind somit als Getriebeverdichter oder Expanderanlage oder eine Kombination aus beiden ausgebildet. Im dargestellten Fall sind als Abtriebsaggregate mit jeder der mit den Ritzeln verbundenen Ritzelwellen gekoppelte Verdichter V1 bis V4 vorgesehen, während eine Antriebsmaschine 44 über das Stirnrad 42 in Form eines Zwischenrades diese antreibt.

Die Figur 17 verdeutlicht beispielhaft eine Weiterbildung einer Ausführung gemäß Figur 14, bei welcher ein weiteres, in vertikaler Richtung zu den anderen Stirnrädern 1, 40 und 2 versetztes Stirnrad 45 in Form eines Ritzels mit dem Stirnrad 2 in Eingriff steht. Die Drehachsen der einzelnen Stirnräder sind somit in unterschiedlichen Ebenen angeordnet. Auch hier umschließt die Hüllwand 5 den Stirnradzug, wobei die jeweils in Einbaulage in axialer Richtung betrachtet äußeren Stirnräder derart von dieser in Umfangsrichtung umschlossen werden, dass ein Teilbereich dieser in Richtung zum Ölsumpf 19 hinausragen.

### Bezugszeichenliste

- 1: Stirnrad
- 2: Stirnrad
- 3: Drehachse
- 4: Drehachse
- 5: Hüllwand
- 6: Ringspalt
- 7, 7.1, 7.2: Ringspalt
- 8: Seitendeckel
- 9: Seitendeckel
- 10: Welle
- 11: Welle
- 12: Öffnung
- 13: Getriebegehäuse
- 14: Innenraum
- 15: Eingriffsbereich der Verzahnungen
- 16: Keil
- 17: Keil
- 18: Vakuumpumpe
- 19: Ölsumpf
- 20: herausragender Teil
- 21: erster Ölvolumenstrom
- 22: erste Ölpumpe
- 23: zweiter Ölvolumenstrom
- 24: zweiter Ölpumpe
- 25: Kühlrippen
- 26: Schmiereinrichtung
- 27: Kühleinrichtung
- 28: Kühlkanal
- 29: Steg
- 30: Rohr
- 31: Auslassöffnung
- 32: Wartungsöffnung
- 33: Seitenwand
- 34: Stufen
- 35: Hohlprofil
- 36: Wärmetauscher
- 37: Seitenblech
- 40: Stirnrad, insbesondere Ritzel
- 41: Ringspalt
- 42: Stirnrad, insbesondere Zwischenrad
- 43: Ringspalt
- 44: Antriebsmaschine
- 45: Stirnrad, insbesondere Ritzel
- 46: Ringspalt
- 47: Getriebeturbomaschine

## Patentansprüche

1. Stirnradgetriebe mit wenigstens zwei verzahnten Stirnrädern (1, 2), deren Verzahnungen in einem kämmenden Eingriff miteinander stehen und die jeweils über einer Drehachse (3, 4) drehbar sind;
1.1 mit einer Hüllwand (5), welche die beiden Stirnräder (1, 2) zumindest teilweise in Umfangsrichtung und in Richtung der Drehachsen (3, 4) umschließt; wobei
1.2 die Hüllwand (5) eine Innenkontur aufweist, welche den Außendurchmessern der Stirnräder (1, 2) derart angepasst ist, dass sich zwischen der Hüllwand (5) und den Stirnrädern (1, 2), insbesondere zwischen der Hüllwand (5) und den zwei miteinander im Eingriff stehenden Stirnrädern zwei ineinander übergehende Ringspalte (6, 7) ergeben, wobei je ein Ringspalt (6, 7) konzentrisch zu je einer Drehachse (3, 4) angeordnet ist;
1.3 mit einer Schmiereinrichtung (26), die eingerichtet ist, einen Schmiermittelstrom in die Verzahnungen der Stirnräder (1, 2) zu leiten; und
1.4 zusätzlich eine Kühleinrichtung (27) vorgesehen ist;
**dadurch gekennzeichnet, dass**
1.5 die Kühleinrichtung eingerichtet ist, einen Kühlmittelstrom durch einen oder mehrere innerhalb der Hüllwand (5) verlaufende Kühlkanäle (28) und/oder außen entlang der Hüllwand (5) zu leiten;
1.6 die Hüllwand (5) einen die Innenkontur ausbildenden, wärmeleitenden Teil und einen außen daran angeschlossenen oder sich integral daran anschließenden Wärmetauscher (36), in dem der wenigstens eine Kühlkanal (28) ausgebildet ist, umfasst.

2. Stirnradgetriebe gemäß Anspruch 1, **dadurch gekennzeichnet, dass** ein Massen- und/oder Volumenstrom des Kühlmittelstromes der Kühleinrichtung (27) und des Schmiermittelstromes der Schmiereinrichtung (26) getrennt voneinander und insbesondere unabhängig voneinander einstellbar sind.

3. Stirnradgetriebe gemäß einem der Ansprüche 1 oder 2, **dadurch gekennzeichnet, dass** der Kühlmittelstrom einen ersten Ölvolumenstrom (21) umfasst und der Schmiermittelstrom einen zweiten Ölvolumenstrom (23) umfasst, die aus einem gemeinsamen Ölvorrat, insbesondere Ölsumpf (19) im Stirnradgetriebe, oder aus voneinander getrennten Ölvorräten gefördert werden.

4. Stirnradgetriebe gemäß einem der Ansprüche 1 bis3, **dadurch gekennzeichnet, dass** die Hüllwand (5) wenigstens einen Kühlkanal (28) umfasst, der wenigstens teilweise in Richtung der Drehachsen (3, 4) und/oder winklig, insbesondere senkrecht hierzu, innerhalb der Hüllwand (5) verläuft und in seinem Verlauf wenigstens abschnittsweise der Innenkontur der Hüllwand (5) folgt.

5. Stirnradgetriebe gemäß einem der Ansprüche 1 bis 4, **dadurch gekennzeichnet, dass** der die Innenkontur ausbildende, wärmeleitende Teil massiv ausgeführt ist.

6. Stirnradgetriebe gemäß einem der Ansprüche 1 bis 5, **dadurch gekennzeichnet, dass** der Wärmetauscher (36) als Plattenwärmetauscher oder Rohrbündelwärmetaucher ausgeführt ist.

7. Stirnradgetriebe gemäß einem der Ansprüche 1 bis 6, **dadurch gekennzeichnet, dass** der Kühlmittelstrom frei in einen unterhalb der Hüllwand (5) positionierten Ölsumpf (19) abläuft.

8. Stirnradgetriebe gemäß einem der Ansprüche 1 bis 7, **dadurch gekennzeichnet**, die Hüllwand (5) die beiden Stirnräder (1, 2) in Umfangsrichtung nur über einen Teil von deren Umfang umschließt, sodass ein Teil des äußeren Umfangs der beiden Stirnräder (1, 2) oder zumindest eines der beiden Stirnräder (1, 2) nach außen aus der Hüllwand (5) herausragt, wobei der aus der Hüllwand (5) herausragende Teil beider Stirnräder (1, 2) oder des einen Stirnrads (1, 2) auf der Unterseite der Stirnräder (1, 2) positioniert ist.

9. Stirnradgetriebe gemäß Anspruch 8, **dadurch gekennzeichnet, dass** sich der aus der Hüllwand (5) herausragende Teil des äußeren Umfangs der beiden Stirnräder (1, 2) über einen Bogen von jeweils 10° bis 180°, insbesondere von 90° bis 180° erstreckt.

10. Stirnradgetriebe gemäß Anspruch 8 oder 9, **dadurch gekennzeichnet, dass** die Hüllwand eine axiale Erstreckung aufweist, die zumindest der axialen Erstreckung des zumindest teilweise zu umschließenden Stirnrades entspricht oder größer als die axiale Erstreckung des Stirnrades ist.

11. Stirnradgetriebe gemäß einem der Ansprüche 8 bis 10, **dadurch gekennzeichnet, dass** die Hüllwand frei von in axialer Richtung bezogen auf das Stirnrad betrachtet angeordneten und mit dem in Umfangsrichtung um das jeweilige Stirnrad verlaufenden Teil der Hüllwand verbundenen Seitendeckeln ist oder
die Hüllwand von einem in Umfangsrichtung um das jeweilige Stirnrad verlaufenden Wandbereich und mit diesem verbundenen oder integral ausgebildeten und axial beabstandet zum Stirnrad angeordneten Seitenblechen gebildet wird, wobei das einzelne Seitenblech in radialer Richtung betrachtet mit einer radialen Erstreckung im Bereich des Außendurchmessers des jeweiligen Stirnrades ausgebildet ist.

12. Stirnradgetriebe gemäß einem der Ansprüche 8 bis 11, **dadurch gekennzeichnet, dass** die Ringspalte (6, 7) eine Dicke von 1 bis 10 mm aufweisen.

13. Stirnradgetriebe gemäß einem der Ansprüche 8 bis 12, **dadurch gekennzeichnet, dass** die Hüllwand (5) an wenigstens einem Umfangsende oder an beiden Umfangsenden in Umfangsrichtung der Stirnräder (1, 2) keilförmig verjüngt ausgeführt ist und/oder mit einem geringeren Abstand gegenüber der Verzahnung des jeweiligen Stirnrades (1, 2) angeordnet ist als im übrigen Bereich des von der Hüllwand (5) überdeckten Umfangs.

14. Stirnradgetriebe nach einem der vorhergehenden Ansprüche, **dadurch gekennzeichnet, dass** dieses eine Mehrzahl von um jeweils eine Drehachse drehbaren Stirnrädern umfasst, wobei jedes der Stirnräder mit wenigstens einem anderen der Stirnräder kämmend in Eingriff steht und die Hüllwand um wenigstens einen Teilbereich jedes der Stirnräder verlaufend ausgebildet ist, wobei die Drehachsen einzelner oder aller Stirnräder in einer Ebene, insbesondere einer gemeinsamen Teilfuge des Getriebegehäuses angeordnet sind.

15. Getriebeturbomaschine (47), welche über ein Stirnradgetriebe gemäß einem der Ansprüche 1 bis 14 An- und/oder Abtriebsaggregate (44, V1, V2, V3, V4) durch Verbindung mit den einzelnen mit den Stirnrädern verbundenen Wellen zu einem Maschinenstrang integriert.

16. Getriebeturbomaschine (47) nach Anspruch 15,
**dadurch gekennzeichnet:**
**dass** das mit zumindest einer der An- und/oder Abtriebswellen verbundene An- und/oder Abtriebsaggregat (V1, V2, V3, V4) ein Element aus der Gruppe nachfolgend genannter Elemente ist:
- ein Laufrad einer Kompressorstufe
- ein Laufrad einer Expanderstufe.

## Claims

1. Spur gear mechanism with at least two toothed spur gears (1, 2), the toothing systems of which are in meshing engagement with one another and which can be rotated in each case about a rotational axis (3, 4);
1.1 with an encasing wall (5) which surrounds the two spur gears (1, 2) at least partially in the circumferential direction and in the direction of the rotational axes (3, 4);
1.2 the encasing wall (5) having an inner contour which is adapted to the external diameters of the spur gears (1, 2) in such a way that two annular gaps (6, 7) which merge into one another result between the encasing wall (5) and the spur gears (1, 2), in particular between the encasing wall (5) and the two spur gears which are in engagement with one another, in each case one annular gap (6, 7) being arranged concentrically with respect to in each case one rotational axis (3, 4);
1.3 with a lubricating device (26) which is set up to conduct a lubricant flow into the toothing systems of the spur gears (1, 2); and
1.4 a cooling device (27) additionally being provided; **characterized in that**
1.5 the cooling device is set up to conduct a coolant flow through one or a plurality of cooling ducts (28) which run within the encasing wall (5) and/or to conduct it on the outside along the encasing wall (5) ;
1.6 the encasing wall (5) comprises a thermally conducting part which configures the inner contour, and a heat exchanger (36) which is connected to it on the outside or adjoins it integrally and in which the at least one cooling duct (28) is configured.

2. Spur gear mechanism according to Claim 1, **characterized in that** a mass and/or volumetric flow of the coolant flow of the cooling device (27) and of the lubricant flow of the lubricating device (26) can be set separately from one another and, in particular, independently of one another.

3. Spur gear mechanism according to either of Claims 1 and 2, **characterized in that** the coolant flow comprises a first oil volumetric flow (21) and the lubricant flow comprises a second oil volumetric flow (23), which oil volumetric flows (21, 23) are conveyed from a common oil supply, in particular an oil sump (19) in the spur gear mechanism, or from oil supplies which are separate from one another.

4. Spur gear mechanism according to one of Claims 1 to 3, **characterized in that** the encasing wall (5) comprises at least one cooling duct (28) which runs within the encasing wall (5) at least partially in the direction of the rotational axes (3, 4) and/or at an angle, in particular perpendicularly with respect thereto, and the course of which cooling duct (28) follows the inner contour of the encasing wall (5) at least in sections.

5. Spur gear mechanism according to one of Claims 1 to 4, **characterized in that** the thermally conducting part which configures the inner contour is of solid configuration.

6. Spur gear mechanism according to one of Claims 1 to 5, **characterized in that** the heat exchanger (36) is configured as a plate heat exchanger or a tubular heat exchanger.

7. Spur gear mechanism according to one of Claims 1 to 6, **characterized in that** the coolant flow runs out freely into an oil sump (19) which is positioned below the encasing wall (5).

8. Spur gear mechanism according to one of Claims 1 to 7, **characterized in that** the encasing wall (5) surrounds the two spur gears (1, 2) in the circumferential direction only over a part of their circumference, with the result that a part of the outer circumference of the two spur gears (1, 2) or of at least one of the two spur gears (1, 2) protrudes out of the encasing wall (5) to the outside, that part of the two spur gears (1, 2) or of the one spur gear (1, 2) which protrudes out of the encasing wall (5) being positioned on the underside of the spur gears (1, 2).

9. Spur gear mechanism according to Claim 8, **characterized in that** that part of the outer circumference of the two spur gears (1, 2) which protrudes out of the encasing wall (5) extends over an arc of in each case from 10° to 180°, in particular of from 90° to 180°.

10. Spur gear mechanism according to Claim 8 or 9, **characterized in that** the encasing wall has an axial extent which corresponds at least to the axial extent of the spur gear to be surrounded at least partially, or is greater than the axial extent of the spur gear.

11. Spur gear mechanism according to one of Claims 8 to 10, **characterized in that** the encasing wall is free from side covers which are arranged in the axial direction as viewed in relation to the spur gear and are connected to that part of the encasing wall which runs around the respective spur gear in the circumferential direction, or
the encasing wall is formed by a wall region which runs around the respective spur gear in the circumferential direction, and by side plates which are connected to or configured integrally with the said wall region and are arranged spaced apart axially from the spur gear, the individual side plate being configured, as viewed in the radial direction, with a radial extent in the region of the external diameter of the respective spur gear.

12. Spur gear mechanism according to one of Claims 8 to 11, **characterized in that** the annular gaps (6, 7) have a thickness of from 1 to 10 mm.

13. Spur gear mechanism according to one of Claims 8 to 12, **characterized in that** the encasing wall (5) is configured so as to taper in a wedge-shaped manner at at least one circumferential end or at the two circumferential ends in the circumferential direction of the spur gears (1, 2), and/or is arranged at a smaller spacing with respect to the toothing system of the respective spur gear (1, 2) than in the remaining region of the circumference which is covered by the encasing wall (5).

14. Spur gear mechanism according to one of the preceding claims, **characterized in that** it comprises a plurality of spur gears which can be rotated about in each case one rotational axis, each of the spur gears being in meshing engagement with at least one other one of the spur gears, and the encasing wall being configured so as to run around at least one part region of each of the spur gears, the rotational axes of individual or all spur gears being arranged in one plane, in particular a common joint of the transmission housing.

15. Geared turbomachine (47) which, via a spur gear mechanism according to one of Claims 1 to 14, integrates drive and/or output units (44, V1, V2, V3, V4) by way of connection to the individual shafts which are connected by way of the spur gears to form a machinery train.

16. Geared turbomachine (47) according to Claim 15, **characterized:**
**in that** the drive and/or output unit (V1, V2, V3, V4) which is connected to at least one of the drive and/or output shafts is an element from the group of elements mentioned in the following:
- an impeller of a compressor stage
- an impeller of an expander stage.

## Revendications

1. Engrenage à pignons droits comprenant au moins deux pignons droits dentés (1, 2) dont les dentures sont en prise d'engrènement l'une avec l'autre, et qui peuvent à chaque fois tourner par le biais d'un axe de rotation (3, 4) ;
1.1 avec une paroi d'enveloppe (5) qui enveloppe les deux pignons droits (1, 2) au moins en partie dans la direction périphérique et dans la direction des axes de rotation (3, 4) ;
1.2 la paroi d'enveloppe (5) présentant un contour intérieur qui est adapté aux diamètres extérieurs des pignons droits (1, 2) de telle sorte qu'il se forme deux fentes annulaires se prolongeant l'une dans l'autre (6, 7) entre la paroi d'enveloppe (5) et les pignons droits (1, 2), en particulier entre la paroi d'enveloppe (5) et les deux pignons droits en prise l'un avec l'autre, une fente annulaire (6, 7) étant disposée à chaque fois concentriquement par rapport à un axe de rotation respectif (3, 4) ;
1.3 avec un dispositif de lubrification (26) qui est prévu pour conduire un écoulement de lubrifiant dans les dentures des pignons droits (1, 2) ; et
1.4 un dispositif de refroidissement (27) étant en outre prévu ;
**caractérisé en ce que**
1.5 le dispositif de refroidissement est prévu pour conduire un écoulement de réfrigérant à travers un ou plusieurs canaux de refroidissement (28) s'étendant à l'intérieur de la paroi d'enveloppe (5) et/ou à l'extérieur le long de la paroi d'enveloppe (5) ;
1.6 la paroi d'enveloppe (5) comprend une partie thermoconductrice constituant le contour intérieur et un échangeur de chaleur (36) raccordé à celle-ci à l'extérieur ou se raccordant intégralement à celle-ci, dans lequel est réalisé l'au moins un canal de refroidissement (28).

2. Engrenage à pignons droits selon la revendication 1, **caractérisé en ce qu'**un débit massique et/ou un débit volumique de l'écoulement de réfrigérant du dispositif de refroidissement (27) et de l'écoulement de lubrifiant du dispositif de lubrification (26) peuvent être ajustés séparément l'un de l'autre et notamment indépendamment l'un de l'autre.

3. Engrenage à pignons droits selon l'une quelconque des revendications 1 et 2, **caractérisé en ce que** l'écoulement de réfrigérant comprend un premier débit volumique d'huile (21) et l'écoulement de lubrifiant comprend un deuxième débit volumique d'huile (23) qui sont refoulés depuis une réserve d'huile commune, en particulier un carter d'huile (19) dans l'engrenage à pignons droits ou depuis des réserves d'huile séparées l'une de l'autre.

4. Engrenage à pignons droits selon l'une quelconque des revendications 1 à 3, **caractérisé en ce que** la paroi d'enveloppe (5) comprend au moins un canal de refroidissement (28) qui s'étend au moins en partie dans la direction des axes de rotation (3, 4) et/ou suivant un certain angle, en particulier perpendiculairement à ceux-ci, à l'intérieur de la paroi d'enveloppe (5) et dont l'allure suit au moins en partie le contour intérieur de la paroi d'enveloppe (5).

5. Engrenage à pignons droits selon l'une quelconque des revendications 1 à 4, **caractérisé en ce que** la partie thermoconductrice constituant le contour intérieur est réalisée sous forme massive.

6. Engrenage à pignons droits selon l'une quelconque des revendications 1 à 5, **caractérisé en ce que** l'échangeur de chaleur (36) est réalisé sous forme d'échangeur de chaleur à plaques ou sous forme d'échangeur de chaleur à faisceaux de tubes.

7. Engrenage à pignons droits selon l'une quelconque des revendications 1 à 6, **caractérisé en ce que** l'écoulement de réfrigérant s'écoule librement dans un carter d'huile (19) positionné en dessous de la paroi d'enveloppe (5).

8. Engrenage à pignons droits selon l'une quelconque des revendications 1 à 7, **caractérisé en ce que** la paroi d'enveloppe (5) entoure les deux pignons droits (1, 2) dans la direction périphérique seulement sur une partie de leur périphérie, de telle sorte qu'une partie de la périphérie extérieure des deux pignons droits (1, 2) ou d'au moins l'un des deux pignons droits (1, 2) fasse saillie vers l'extérieur hors de la paroi d'enveloppe (5), la partie faisant saillie hors de la paroi d'enveloppe (5) des deux pignons droits (1, 2) ou de l'un des pignons droits (1, 2) étant positionnée sur le côté inférieur des pignons droits (1, 2).

9. Engrenage à pignons droits selon la revendication 8, **caractérisé en ce que** la partie de la périphérie extérieure des deux pignons droits (1, 2), faisant saillie hors de la paroi d'enveloppe (5) s'étend à chaque fois suivant un arc de 10° à 180°, en particulier de 90° à 180°.

10. Engrenage à pignons droits selon la revendication 8 ou 9, **caractérisé en ce que** la paroi d'enveloppe présente une étendue axiale qui correspond au moins à l'étendue axiale du pignon droit devant être au moins en partie entouré ou qui est supérieure à l'étendue axiale du pignon droit.

11. Engrenage à pignons droits selon l'une quelconque des revendications 8 à 10, **caractérisé en ce que** la paroi d'enveloppe est exempte de couvercles latéraux disposés dans la direction axiale, lorsque considérés par rapport au pignon droit, et connectés à la partie de la paroi d'enveloppe s'étendant dans la direction périphérique autour du pignon droit respectif ou
la paroi d'enveloppe est formée par une région de paroi s'étendant dans la direction périphérique autour du pignon droit respectif et par des tôles latérales connectées à celle-ci ou réalisées intégralement et disposées de manière espacée axialement par rapport au pignon droit, la tôle latérale individuelle, vue dans la direction radiale, étant réalisée avec une étendue radiale dans la région du diamètre extérieur du pignon droit respectif.

12. Engrenage à pignons droits selon l'une quelconque des revendications 8 à 11, **caractérisé en ce que** les fentes annulaires (6, 7) présentent une épaisseur de 1 à 10 mm.

13. Engrenage à pignons droits selon l'une quelconque des revendications 8 à 12, **caractérisé en ce que** la paroi d'enveloppe (5) est réalisée de manière rétrécie en forme de clavette au niveau d'au moins une extrémité périphérique ou au niveau des deux extrémités périphériques dans la direction périphérique des pignons droits (1, 2) et/ou est disposée à faible distance de la denture du pignon droit respectif (1, 2) en tant que région restante de la périphérie couverte par la paroi d'enveloppe (5) .

14. Engrenage à pignons droits selon l'une quelconque des revendications précédentes, **caractérisé en ce que** celui-ci comprend une pluralité de pignons droits pouvant chacun tourner autour d'un axe de rotation, chacun des pignons droits étant en prise d'engrènement avec au moins un autre des pignons droits et la paroi d'enveloppe étant réalisée de manière à s'étendre autour d'au moins une région partielle de chacun des pignons droits, les axes de rotation de pignons droits individuels ou de tous les pignons droits étant disposés dans un plan, en particulier d'un joint de séparation commun du boîtier d'engrenage.

15. Turbomachine à engrenage (47), qui, par le biais d'un engrenage à pignons droits selon l'une quelconque des revendications 1 à 14, intègre des groupes d'entraînement et/ou de prise de force (44, V1, V2, V3, V4) par connexion aux arbres individuels connectés aux pignons droits pour obtenir un train de machines.

16. Turbomachine à engrenages (47) selon la revendication 15,
**caractérisée en ce que** :
le groupe d'entraînement et/ou de prise de force (V1, V2, V3, V4) connecté à au moins l'un des aux arbres d'entraînement et/ou de prise de force est un élément du groupe comprenant les éléments ci-dessous :
- un rotor d'un étage d'un compresseur,
- un rotor d'un étage d'un expanseur.
